# EUROPÄISCHE PATENTSCHRIFT

(11) **EP 2 664 298 B1**
(45) Veröffentlichungstag und Bekanntmachung des Hinweises auf die Patenterteilung: **05.04.2017**
(21) Anmeldenummer: 12405046.9
(22) Anmeldetag: 16.05.2012
(51) Int. Cl.: A61C 17/22

(54) **Elektrische Zahnbürste sowie ein Aufsteckbürstenteil und Handteil für eine elektrische Zahnbürste**
Electrical toothbrush, brush head connector, and handle for an electrical toothbrush
Brosse à dents électrique, connecteur de la tête de brosse et poignée pour une brosse à dents électrique

(43) Veröffentlichungstag der Anmeldung: 20.11.2013
(73) Patentinhaber: Trisa Holding AG, 6234 Triengen (CH)
(72) Erfinder: Kirchhofer, Pierre, 6235 Winikon (CH); Hilfiker, Christian, 6234 Triengen (CH)
(74) Vertreter: Frei Patent Attorneys

(56) Entgegenhaltungen:
- WO-A1-00/76420
- DE-A1- 4 309 078
- US-A1- 2003 115 695

## Beschreibung

Die Erfindung bezieht sich auf das Gebiet der elektrischen Mundhygienegeräte, insbesondere der elektrischen Zahnbürsten. Sie betrifft ein Aufsteckpflegeteil, insbesondere ein Aufsteckbürstenteil, sowie ein Handteil eines elektrischen Mundhygienegeräts, insbesondere einer elektrischen Zahnbürste, gemäss dem Oberbegriff der Ansprüche 1 und 7. Ferner betrifft die Erfindung auch ein elektrisches Mundhygienegerät, insbesondere eine elektrische Zahnbürste, nach Anspruch 13 umfassend ein Aufsteckpflegeteil und ein Handteil.

Elektrische Zahnbürsten zeichnen sich dadurch aus, dass der Bürstenkopf der Zahnbürste über einen elektromotorischen Antrieb in Bewegung versetzt wird. Diesbezüglich sind heute auf dem Markt verschiedene Typen von elektrischen Zahnbürsten bekannt, beispielsweise die Rotationszahnbürste und die Schallzahnbürste. Die Rotationszahnbürste zeichnet sich dadurch aus, dass der Bürstenkopf oder Teile davon um eine Drehachse oszillierend-rotiert. Bei der Schallzahnbürste wird der Bürstenkopf hingegen mit einer relativ hohen Frequenz in Schwingung versetzt. Ferner sind auch andere Bewegungsformen wie die translatorische Bewegung von Teilen des Bürstenkopfes in Längsrichtung der Zahnbürste oder seitliches, reversierendes Schwenken von Teilen des Bürstenkopfes oder von ganzen Bürstenköpfen bekannt. Kombinationen verschiedener Bewegungsformen sind ebenfalls bekannt.

Vielen bekannten Bauformen ist unabhängig von der Bewegungsform des Bürstenkopfes und insbesondere unabhängig davon, ob die elektrische Zahnbürste eine Rotationszahnbürste oder Schallzahnbürste ist, jedoch gemeinsam, dass diese ein Handteil und ein als separates Bauteil ausgebildetes Aufsteckbürstenteil enthalten.

Das Handteil beinhaltet insbesondere einen elektromotorischen Antrieb sowie einen Akkumulator zur Stromversorgung. Die separate Ausbildung des Aufsteckbürstenteils liegt darin begründet, dass die Aufsteckbürstenteile von Zeit zu Zeit ausgetauscht werden müssen, weil z. B. die Borsten verschlissen sind oder aus hygienischen Gründen das bisherige Aufsteckbürstenteil nicht mehr verwendet werden sollte. Auf diese Weise kann das relativ langlebige Handteil weit über die durchschnittliche Lebenserwartung eines Aufsteckbürstenteils hinaus verwendet werden. Ferner erlaubt die Austauschbarkeit der Aufsteckbürstenteile auch die Benutzung eines einzigen Handteils durch mehrere Benutzer, zum Beispiel durch mehrere Familienmitglieder.

Im Weiteren haben die oben genannten elektrischen Zahnbürsten gemeinsam, dass das Handteil und das Aufsteckbürstenteil Kupplungsmittel zum gegenseitigen Kuppeln der beiden Bauteile aufweisen. Die Kupplungsmittel umfassen bei vielen Ausführungsformen eine am Aufsteckbürstenteil endseitig an einem Halskörper angeformte Kupplungshülse. Ferner umfassen diese Kupplungsmittel einen am Handteil endseitig an einem Griffkörper angeordneten Kupplungszapfen. Aus dem Kupplungszapfen ist ein Antriebsstift geführt, welcher mechanische Antriebsenergie in das Aufsteckbürstenteil überträgt.

Weiter ist es auch möglich, dass der Kupplungszapfen auf dem Antriebsstift fest aufgebracht ist und die Bewegung des Antriebsstifts auch auf den Kupplungszapfen übertragen wird.

Bei einer Rotationszahnbürste wird der Antriebsstift durch den Elektromotor in eine oszillierende Drehung versetzt, welche über mechanische Mittel im Handteil und dem Aufsteckbürstenteil in eine oszillierende Rotationsbewegung des Bürstenkopfes umgesetzt wird.

Bei einer Schallzahnbürste wird der Antriebsstift durch den Elektromotor in eine vergleichsweise hochfrequente Schwingung versetzt, welche direkt auf das Aufsteckbürstenteil und entsprechend auch auf den Bürstenkopf übertragen wird. Kombinierte Bewegungsformen des Antriebsstiftes sind ebenfalls bekannt.

Für eine optimale Übertragung der mechanischen Bewegung vom Antriebsstift auf das Aufsteckbürstenteil ist es wichtig, dass das Handteil und das Aufsteckbürstenteil optimal miteinander kuppeln. Ferner müssen die Kupplungsmittel so ausgelegt sein, dass die Verbindung der beiden Teile im gekoppelten Zustand sowohl axial als auch gegen Verdrehung gesichert ist.

Bei einer Weiterentwicklung einer elektrischen Zahnbürste, welche auf einem Vorgängermodell aufbaut, ist es zudem oftmals wünschenswert, dass neue Aufsteckbürstenteile sowohl zu den neuen als auch zu den älteren Modellen von Handteilen kompatibel sind. Aufsteckbürstenteile der Vorgängermodelle sollen jedoch nicht kompatibel zu den Handteilen des neuen Modells sein, weil sonst die verbesserten Funktionen des Nachfolgermodells nicht voll zum tragen kommen oder gar eine Beschädigung der Zahnbürste droht.

Die Veröffentlichungsschrift WO 00/76420 A1 beschreibt eine elektrische Zahnbürste mit einem Handteil und einer Aufsteckbürste. Die Aufsteckbürste enthält erste Kupplungsmittel zum axialen Fixieren der Aufsteckbürste auf einem Gehäuseansatz des Handteils sowie zweite Kupplungsmittel zur Verdrehsicherung der Aufsteckbürste relativ zum Gehäuseansatz. Die Kupplungsmittel sind in einem als separates Bauteil in die Aufsteckbürste eingesetzten Verriegelungseinsatz vorgesehen.

Die Veröffentlichungsschrift US 2003/0115695 A1 beschreibt eine elektrische Zahnbürste mit einem austauschbaren Bürstenkopf. Der Bürstenkopf ist über Kupplungsmittel auf dem Handteil aufsteckbar.

Die Veröffentlichungsschrift DE 43 09 078 A1 beschreibt ein elektrisch betriebenes Zahnreinigungsgerät mit einem Aufsatzteil mit Reinigungswerkzeug, welches auf ein Griffteil aufgesteckt ist.

Es ist deshalb Aufgabe der vorliegenden Erfindung, ein Aufsteckpflegeteil, insbesondere ein Aufsteckbürstenteil, ein Handteil sowie ein elektrisches Mundhygienegerät, insbesondere eine elektrische Zahnbürste, umfassend ein solches Aufsteckpflegeteil und Handteil, vorzuschlagen, welche eine bessere und sicherere Kupplung der beiden Teile ermöglichen. So sollen sowohl das verdrehgesicherte Halten sowie das Abziehen des Aufsteckteils vom Handteil verbessert werden. Das neue Aufsteckpflegeteil soll dabei kompatibel zu Vorgängermodellen von Handteilen sein. Das erfindungsgemässe Handteil, welches kompatibel zum neuen Aufsteckpflegeteil ist, soll jedoch nicht kompatibel zu Vorgängermodellen von Aufsteckpflegeteilen sein. Ferner soll insbesondere das erfindungsgemässe Aufsteckpflegeteil auch fertigungstechnische Vorteile aufweisen.

Die Aufgabe wird durch die Merkmale der unabhängigen Ansprüche 1 und 5 gelöst. Vorteilhafte Weiterbildungen und Ausführungsformen der Erfindung ergeben sich aus den abhängigen Ansprüchen, der Beschreibung und den Zeichnungen.

Das Aufsteckpflegeteil ist besonders bevorzugt ein Aufsteckbürstenteil. Es kann jedoch auch ein anders Pflegeteil für die Mundhygiene, wie z. B. ein Zungenreiniger sein.

Das Aufsteckpflegeteil zum Aufstecken auf das Handteil eines elektrischen Mundhygienegeräts enthält erfindungsgemäss einen Pflegekopf mit einem Reinigungselement für die Mundhygiene.

Ist das Aufsteckpflegeteil ein Aufsteckbürstenteil, so enthält dieses einen Pflegekopf in Ausführung eines Bürstenkopfs mit einem Borstenträger, welcher ein Borstenfeld aufnimmt.

Das Borstenfeld kann aus konventionellen Borsten bestehen. Die Befestigung der Borsten im Kopfteil bzw. auf dem Trägerteil kann auf verschiedene Weisen erfolgen. Beispielsweise kann das bekannte Anchor Free Tufting (AFT) - Verfahren angewendet werden. Weiter können die Borsten mittels des konventionellen Ankerstanz-Verfahren im Griffkörper befestigt werden. Ferner können auch andere bekannte Beborstungsverfahren wie beispielsweise IAP (Integrated Anchorless Production) oder IMT (In Mould Tufting) zum Einsetzen der Borsten verwendet werden. Überdies können die Borsten auch mittels Spritzgiessen direkt aus dem Kunststoffmaterial im Spritzgiesswerkzeug geformt werden.

Die Borsten sind bevorzugt aus Kunststoff. Sie können zylindrisch oder zugespitzt sein. Das Borstenfeld bzw. der Borstenträger kann im Weiteren auch Massage- und/oder weitere Reinigungselemente enthalten. Diese können aus einem gummielastischen Material sein.

Das Aufsteckpflegeteil enthält eine Kupplungshülse. Die Kupplungshülse dient zum Aufstecken des Aufsteckpflegeteils auf einen Kupplungszapfen eines Handteils. Der Pflegekopf und die Kupplungshülse sind über einen rohrförmigen Halskörper miteinander verbunden. Der rohrförmige Halskörper ist zur Aufnahme des Antriebsstiftes eines Handteils ausgelegt. Der Hohlraum der Kupplungshülse weist einen runden Basisquerschnitt auf. Der Basisquerschnitt ist bevorzug kreisförmig ausgebildet.

Gemessen oder festgestellt wird der Basisquerschnitt in der Kupplungshülse oder auf dem Kupplungszapfen. Am Kupplungszapfen an jenem Ende des Zapfens, welches dem Handteil näher ist. An der Kupplungshülse an der Stelle, an der die Axialnut auf der Einschubseite beginnt.

Der Körperaufbau des Aufsteckpflegeteils kann verschieden erfolgen. Beispielsweise kann die Kupplungshülse direkt mit dem Halskörper hergestellt werden d.h. spritzgegossen werden oder sie kann als separates Teil geformt werden und anschliessend in einem Montagevorgang mit dem Halskörper zusammengefügt werden. Der Halskörper selbst kann wiederum einteilig oder mehrteilig geformt werden, je nachdem direkt mit integrierter Kupplungshülse.

Die Montage verschiedener Teile des Aufsteckpflegeteils kann verschiedene Befestigungsmechanismen benötigen, so können die Teile beispielsweise geschnappt, geklebt, verscheisst, verpresst oder in einer Kombination davon zusammen fixiert werden. Vorzugsweise werden die Teile unlösbar verbunden. Der Montagevorgang kann selbstverständlich mit den nötigen Montageschritten für das Innenleben des Aufsteckpflegeteils kombiniert werden, die Teile sind entsprechend funktional ausgelegt.

Ist die Kupplungshülse als Zusatzteil geformt, so wird das Teil vorzugsweise in den Halskörper eingeschoben. Die Teile sind so geformt, dass nach der Montage die relative Position einander gegenüber nicht mehr verändert werden kann beispielsweise durch eine Einschubbegrenzung. Durch die Anordnung der Kupplungshülse als Zusatzteil im Innern des Halsteils können auch gewisse funktionale Elemente versteckt angeordnet werden. Beispielsweise die später genannten Rastmittel.

Die Erfindung zeichnet sich nun dadurch aus, dass die Kupplungshülse eine bezüglich des runden Basisquerschnitts kreissegmentförmige Wandverdickung mit einer innen liegenden, ebenen Axialfläche enthält. Durch die Ausgestaltung der Axialfläche als Kreissegment ist gegeben, dass die Normale der Axialfläche mit der Längsachse einen rechten Winkel einschliesst.

Die Wandverdickung bildet eine Querschnittsverengung aus. In der ebenen Axialfläche ist wenigstens eine Axialnut und/oder ein Axialkamm angeordnet. Die Wandverdickung ist bevorzugt auf der Vorderseite (der borstentragenden Seite) des Aufsteckpflegeteils angeordnet.

Gemäss einer bevorzugten Ausführungsform der Erfindung sind in der genannten ebenen Axialfläche keine anderen Elemente als eine oder mehrere Axialnuten oder ein oder mehrere Axialkämme angeordnet.

Eine der Axialnuten oder die eine Axialnut bzw. einer der Axialkämme oder der eine Axialkamm sind bevorzugt mittig zentriert in der Axialfläche angeordnet. Eine asymmetrische Anordnung ist ebenfalls möglich, jedoch für die Verdrehsicherung weniger vorteilhaft.

"Axial" bedeutet, dass sich die besagten Elemente (z.B. Nut oder Kamm) in axialer Richtung des Aufsteckpflegeteils bzw. des Handteils oder des Mundhygienegeräts erstrecken, also parallel zu deren Längsachse. So sind beispielsweise auch der Halskörper, der längliche Griffkörper sowie der Antriebsstift in diese axiale Richtung ausgerichtet. Die Öffnungsrichtung der Nut ist vorzugsweise so, dass die Öffnungsrichtung senkrecht auf der Axialfläche steht. Die Nut besteht aus der Bodenfläche, zwei Seitenflächen sowie einer zum Halskörper hin angeordneten Stirnendfläche.

Die in die Axialfläche eingebrachte Axialnut weist bevorzugt eine Länge in axialer Richtung von 6 bis 20 mm, insbesondere von 10 bis 14 mm auf. Die Länge wird definitionsgemäss in der Bodenfläche der Nut gemessen und erstreckt sich vom innen liegenden Nutende zum öffnungsseitigen Nutende. Ist öffnungsseitig ein trichterförmiger Einlauf vorgesehen, wie weiter unten beschrieben, so erstreckt sich die Länge definitionsgemäss bis zum innen liegenden Ansatz des Einlaufs. D.h., die Länge des Einlaufs wird nicht der Nutlänge angerechnet.

Die Breite der Nut beträgt bevorzugt 1 bis 5 mm, insbesondere 1.5 bis 3 mm. Die Breite wird definitionsgemäss an der Bodenfläche der Nut und quer zur Axialrichtung gemessen.

Die Axialnut weist bevorzugt eine konstante Breite über ihre gesamte Länge auf. Die Breite der Axialnut kann jedoch zum Inneren der Kupplungshülse hin in Axialrichtung auch abnehmen. Man spricht auch vom so genannten "Anzug", der im Wesentlichen einen fertigungstechnischen Hintergrund hat.

So können die Seitenflächen der sich zum Inneren der Kupplungshülse hin verengenden Axialnut zur Axialrichtung einen Winkel von bis 5° (Winkelgrade), insbesondere von 3.5° einschliessen.

Die Tiefe der Axialnut beträgt bevorzugt 0.4 bis 1.2 mm, insbesondere 0.6 bis 0.9 mm. Die Tiefe der Axialnut wird definitionsgemäss auf der Mittelängsachse der Axialnut von der Bodenfläche der Nut bis zur Höhe des Niveaus der an die Axialnut angrenzenden Axialfläche gemessen.

Die Tiefe der Axialnut ist bevorzugt über ihre gesamte Längserstreckung konstant. Die Tiefe kann jedoch ausgehend vom öffnungsseitigen Nutende in Axialrichtung nach innen abnehmen, wiederum im Wesentlichen fertigungstechnisch begründet. Die Bodenfläche der Axialnut kann in diesem Fall gegenüber der Längsachse einen Winkel von bis zu 5°, insbesondere von bis zu 3.5° einschliessen. Dies bedeutet, dass die Nut entlang der Längsachse kleiner wird, d.h. der Abstand der Bodenfläche zum Antriebsstift wird kleiner. Die Distanz zwischen Bodenfläche und Antriebsstift beträgt zwischen 3 und 8 mm, vorzugsweise zwischen 4 und 6 mm. Grundsätzlich ist der Einsatz der Axialnut mit jeglichem Abstand möglich, sofern die Randbedingungen eingehalten sind.

Die Tiefe der Axialnut ist vorzugsweise grösser als die Höhe der weiter unten beschriebenen, optional vorgesehenen Führungserhebungen am Innenumfang der Kupplungshülse oder am Aussenumfang des Kupplungszapfens.

Die Axialnut weist ferner zum freien Hülsenende hin, d.h. öffnungsseitig, bevorzugt einen trichterförmigen Einlauf auf, welcher das Einführen eines Axialkammes am Kupplungszapfen erleichtert und ein Verkanten der Bauteile verhindert. Auf diese Weise wird eine kontinuierliche Geometrie geschaffen.

Die Seitenflächen des trichterförmigen Einlaufs sind bevorzugt gekrümmt. Die maximale Breite des Einlaufs kann öffnungsseitig 2.5 bis 6 mm, insbesondere 3.5 bis 4.5 mm betragen. Der trichterförmige Einlauf kann ferner eine von der Nut zur Öffnungsseite hin zunehmende Tiefe aufweisen. Die Seitenflächen und der Boden der Nut gehen bevorzugt nahtlos in den Einlauf über.

Der Einlauf kann gegenüber der öffnungsseitigen Stirnfläche der Kupplungshülse um 0.5 bis 4 mm, insbesondere um 1 bis 2 mm, zurück versetzt sein.

Die Bodenfläche der Axialnut kann im Querschnitt gekrümmt oder eben sein. Die Bodenfläche kann gegenüber der Längsachse parallel verlaufen oder durchgehend oder abschnittsweise eine Steigung aufweisen.

Die Seitenflächen der Axialnut können gegenüber der Bodenfläche bzw. der Axialfläche senkrecht oder geneigt angeordnet sein. So kann eine oder können beide Seitenflächen von der Bodenfläche aus betrachtet, z. B. trapezförmig, nach aussen oder, z. B. schwalbenschwanzförmig, nach innen geneigt sein. Im ersten Fall nimmt die Breite der Nut zur Bodenfläche hin ab. Im zweiten Fall nimmt die Breite der Nut zur Bodenfläche hin zu.

Die Seitenflächen können zur Bodenfläche bzw. zur Axialfläche einen Winkel von bis zu 45°, vorzugsweise von bis zu 20°, und insbesondere von bis zu 7.5° einschliessen.

Die im Inneren der Kupplungshülse liegende Stirnendfläche der Nut kann senkrecht zur Bodenfläche bzw. zur Axialfläche ausgebildet sein. Die Stirnendfläche kann auch von der Bodenfläche aus betrachtet nach aussen geneigt sein und zur Bodenfläche bzw. zur Axialfläche einen Winkel von bis zu 60°, vorzugsweise von 35° bis 55° einschliessen.

Die Kanten an der Axialnut zwischen den Übergängen zu den einzelnen Flächen sind vorzugsweise eckig oder geringfügig gerundet, bzw. gebrochen ausgebildet.

Die quer zur Längsrichtung gemessene Breite der Axialfläche der kreissegmentförmigen Wandverdickung beträgt rund 4 bis 10 mm, vorzugsweise 5 bis 8 mm. Definitionsgemäss ist die Breite von Radius zu Radius des runden an die Axialfläche angrenzenden Basisquerschnitts gemessen.

Die in Längsrichtung gemessene Länge der kreissegmentförmigen Axialfläche beträgt bevorzugt 6 bis 13 mm, vorzugsweise 8 bis 11 mm. Die Länge der kreissegmentförmigen Axialfläche ist bevorzugt grösser als die Länge der Axialnut.

Die Wanddicke der Kupplungshülse im Bereich des Basisquerschnitts oder generell der Schnittstelle beträgt z. B. 0.8 bis 2.5 mm, insbesondere 1.5 bis 2 mm. Die Wanddicke im Bereich der Bodenfläche der Axialnut beträgt z. B. 1 bis 2 mm, insbesondere 1.35 bis 1.75 mm. Die Differenzen ergeben sich daraus, ob an der entsprechenden Wand Funktionselemente ausgestaltet sind oder nicht.

Die Kupplungshülse enthält im Weiteren bevorzugt eine Rastzunge mit einer nach innen gerichteten Rastnase zum Einrasten in eine Rastnut am Kupplungszapfen eines Handteils. Die Rastzunge ist beispielsweise Teil der Kupplungshülse und über einen Verbindungsabschnitt radial aus der Kupplungshülse federelastisch biegbar. Die Rastzunge ist hierzu ausserhalb des Verbindungsabschnittes von der umgebenden Hülsenwand physisch separiert, z. B. über einen spaltförmigen Durchbruch. Der Durchbruch kann auch mit einem Film aus Weichkunststoff überbrückt werden sein, sodass die Beweglichkeit erhalten bleibt, der Spalt aber mindestens teilweise abgedeckt ist.

Die Rastzunge ist vorzugsweise der kreissegmentförmigen Wandverdickung gegenüber liegend in der Kupplungshülse angeordnet. Die Rastzunge ist entsprechend vorzugsweise auf der Rückseite des Aufsteckpflegeteils angeordnet. Die Anordnung ist vorzugsweise so, dass sich die Flächenormale der Rastzunge bzw. der Rastnase mit dem Antriebsstift schneidet.

Gemäss einer bevorzugten Weiterentwicklung bildet die Kupplungshülse bezüglich des runden Basisquerschnitts ausserhalb der Wandverdickung auf jeder Seite zwischen der Wandverdickung und 180° gegenüber der Nut zwei zueinander benachbarte Führungserhebungen aus, welche eine axiale Führungsaufnahme für einen axialen Führungsstreifen am Kupplungszapfen des korrespondierenden Handteils einschliessen. Gemäss einer bevorzugten Ausführungsform enthält die Kupplungshülse insgesamt vier solcher Führungserhebungen, welche im gesamten zwei axiale Führungsaufnahmen ausbilden.

Gemäss einer weiteren Weiterentwicklung ist es möglich, dass mehrere Axialnuten oder Axialkämme in der Wandverdickung vorgesehen sind. In der Wandverdickung der Kupplungshülse müssen nicht zwingend nur Axialnuten oder nur Axialkämme vorhanden sein. Es ist auch möglich, dass in der Wandverdickung nebeneinander sowohl Axialnuten als auch Axialkämme angeordnet sind.

Falls mehrere Axialnuten und/oder Axialkämme eingesetzt werden, können diese bezüglich der Geometrie, Breite, Länge oder auch Höhe variieren. Vorzugsweise sind sie jedoch bezüglich ihrer Geometrie identisch ausgestaltet.

Ebenfalls möglich ist, die Axialnuten auf dem Kupplungszapfen und den Axialkamm in der Kupplungshülse zu realisieren.

Die Erfindung betrifft im Weiteren ein zum Aufsteckpflegeteil koppelbares Handteil. Das Handteil enthält einen Grifflcörper. Der Griffkörper umfasst bevorzugt ein Gehäuse, welches einen elektromotorischen Antrieb sowie einen Energiespeicher zur Bereitstellung elektrischer Energie und allenfalls auch eine Steuerungselektronik aufnimmt. Der Energiespeicher kann ein Akkumulator oder eine Batterie sein. Ferner kann der Griffkörper in der Gehäusewand auch Anzeigemittel sowie wenigstens eine Bedieneinrichtung zum Ein- und Ausschalten des Mundhygienegeräts enthalten.

Ferner umfasst das Handteil einen endseitig am Griffkörper axial angeordneten Kupplungszapfen mit einem runden Basisquerschnitt zum Kuppeln mit einer Kupplungshülse eines Aufsteckpflegeteils.

Im Weiteren enthält das Handteil einen aus dem Kupplungszapfen axial austretenden Antriebsstift zur Übertragung mechanischer Antriebsenergie auf ein Aufsteckpflegeteil.

Der Antriebsstift ist bevorzugt aus Metall. Der Antriebsstift kann z. B. um 10 bis 40 mm, insbesondere um 15 bis 25 mm aus dem Kupplungszapfen ragen. Der Durchmesser des Antriebsstiftes kann 1.5 bis 5 mm, insbesondere 2 bis 4 mm sein.

Der Antriebsstift weist bevorzugt einen ein- oder zweiseitig abgeflachten Endabschnitt auf. Im ersten Fall enthält der Endabschnitt eine Abflachungsfläche und im zweiten Fall enthält der Endabschnitt zwei einander gegenüber liegende Abflachungsflächen.

Die Länge des Endabschnittes beträgt z. B. 6 bis 18 mm, insbesondere 9 bis 12 mm. Der Durchmesser von Abflachung zu Abflachung beträgt z. B. 1 bis 3 mm, insbesondere 1.5 bis 2.5 mm. Die Tiefe der Abflachung ab Aussendurchmesser beträgt z. B. 0.2 mm bis 1.2 mm, insbesondere 0.4 bis 0.6 mm. Falls mehrere Endabschnitte auf dem Antriebsstift angeordnet sind, können diese bezüglich Länge und Tiefe gleich oder unterschiedlich ausgebildet sein.

Der Endabschnitt geht in seinem dem freien Ende entgegengesetzten Ende vorzugsweise in einer Fase zum Antriebsstift-Durchmesser über. Es kann aber auch ein senkrechter Übergang gestaltet sein.

Das Handteil zeichnet sich dadurch aus, dass der Kupplungszapfen eine bezüglich des runden Basisquerschnitts kreissegmentförmige Aussparung aufweist, welche am Kupplungszapfen eine ebene Axialfläche ausbildet. In der ebenen Axialfläche ist wenigstens ein Axialkamm und/oder eine Axialnut angeordnet. Die Aussparung ist bevorzugt auf der Vorderseite des Handteils angeordnet.

Der Basisquerschnitt des Kupplungszapfens ist ebenfalls bevorzugt kreisförmig ausgebildet.

Gemäss einer bevorzugten Weiterbildung der Erfindung sind in der ebenen Axialfläche keine anderen Elemente als ein oder mehrere Axialkämme oder eine oder mehrere Axialnuten angeordnet. Einer der Axialkämme oder der eine Axialkamm bzw. eine der Axialnuten bzw. die eine Axialnut ist bevorzugt mittig zentriert in der Axialfläche angeordnet. Eine asymmetrische Anordnung ist ebenfalls möglich, jedoch für die Verdrehsicherung weniger vorteilhaft.

Der Axialkamm setzt sich zusammen aus den Kamm-Seitenflächen, der in Richtung Endabschnitt des Antriebsstiftes angeordnete Kamm-Stirnendfläche sowie der Firstfläche.

Der auf die Axialfläche aufgebrachte Axialkamm weist bevorzugt eine Länge in axialer Richtung von 6 bis 20 mm, insbesondere von 10 bis 14 mm auf. Die Länge wird definitionsgemäss entlang der Mittelängsachse auf der Firstfläche zwischen den Kanten der Seitenflächen des Axialkamms gemessen.

Die Länge des Axialkammes ist bevorzugt kürzer als die Länge der Axialnut. So kann der Axialkamm z. B. um bis zu 2 mm, insbesondere um 0.5 bis 1.5 mm kürzer ausgebildet sein als die Axialnut.

Die Breite des Axialkammes beträgt bevorzugt 1 bis 5 mm, insbesondere 1.5 bis 3 mm. Die Breite wird definitionsgemäss an der Firstfläche des Axialkammes und quer zur Axialrichtung gemessen. Die Breite erstreckt sich zwischen den Kanten im Übergang zur den Seitenflächen.

Der Axialkamm weist bevorzugt eine konstante Breite über seine gesamte Länge auf. Die Breite des Axialkammes kann jedoch zum freien Ende hin, d.h. zur Stirnfläche des Kupplungszapfens hin, in Axialrichtung auch abnehmen. Man spricht auch hier vom so genannten "Anzug", der im Wesentlichen einen fertigungstechnischen Hintergrund hat. So können hierzu die Seitenflächen des Axialkamms zur Axialrichtung einen Winkel von bis 5°, insbesondere von 3.5° einschliessen.

Die Höhe des Axialkamms beträgt bevorzugt 0.4 bis 1.2 mm, insbesondere 0.6 bis 1.1 mm. Die Höhe des Axialkammes wird definitionsgemäss auf der Mittelängsachse des Axialkamms ausgehend vom Niveau der seitlich anliegenden Axialfläche sowie senkrecht zu dieser gemessen.

Die Höhe ist bevorzugt über die gesamte Längserstreckung des Axialkamms konstant. Die Höhe kann jedoch zum freien Ende hin in Axialrichtung auch abnehmen, wiederum im Wesentlichen fertigungstechnisch begründet. Die Firstfläche der Axialnut kann in diesem Fall gegenüber der Längsachse einen Winkel von bis zu 5°, insbesondere von bis zu 3.5° aufweisen. Dies bedeutet, dass der Kamm entlang der Längsachse gegenüber der Aussparung kleiner wird.

Die Höhe des Axialkammes ist vorzugsweise grösser als die Höhe der optional vorgesehenen Führungserhebungen am Innenumfang der Kupplungshülse oder am Aussenumfang des Kupplungszapfens.

Die Höhe des Axialkammes ist vorzugsweise gleich oder kleiner als die Tiefe der korrespondierenden Axialnut.

Die Firstfläche des Axialkammes ist bevorzugt eben ausgebildet. Die Firstfläche kann jedoch im Querschnitt auch gekrümmt ausgebildet sein. Die Firstfläche kann gegenüber der Längsachse parallel verlaufen oder durchgehend oder abschnittsweise eine Steigung aufweisen.

Die Seitenflächen des Axialkamms können gegenüber der Firstfläche bzw. den Axialflächen senkrecht oder geneigt angeordnet sein. So kann eine oder können beide Seitenflächen von der Firstfläche aus betrachtet, z. B. trapezförmig, nach aussen oder, z.B. schwalbenschwanzförmig, nach innen geneigt sein. Im ersten Fall nimmt die Breite des Axialkammes zur Firstfläche hin ab. Im zweiten Fall nimmt die Breite des Axialkamms zur Firstfläche hin zu. Gemäss der letztgenannten Ausführungsform greift der Axialkamm mit seinen Seitenflächen in eine Hinterschneidung an der Axialnut.

Die Seitenflächen des Axialkammes können parallel zur Längsachse verlaufen, so dass der Axialkamm eine konstante Breite aufweist. Die Seitenflächen können zur Längsachse jedoch auch einen Winkel einschliessen, derart, dass die Breite des Axialkamms und entsprechend auch die Breite der Firstfläche zur Stirnendfläche hin abnehmen. Dieser Winkel kann z. B. bis 5°, insbesondere bis 3.5° betragen.

Die Firstfläche verläuft vorzugsweise parallel zur Längsachse, kann aber auch einen Einlauf hin zum Antriebsstift haben.

Die Seitenflächen können zur Firstfläche bzw. zur Axialfläche einen Winkel von bis 45°, vorzugsweise bis zu 20° und insbesondere von bis zu 7.5° einschliessen.

Die zur Stirnfläche des Kupplungszapfens weisende Stirnendfläche des Kamms kann senkrecht zur Firstfläche bzw. zur Axialfläche ausgebildet sein. Die Stirnendfläche kann von der Firstfläche aus betrachtet nach aussen geneigt sein und zu dieser bzw. zur Axialfläche einen Winkel von bis 60°, vorzugsweise von 35° bis 55° einschliessen. Dies entspricht einer Art Einlauf.

Die Kanten am Kamm zwischen den Übergängen zu den einzelnen Flächen sind vorzugsweise eckig oder geringfügig gerundet, bzw. gebrochen ausgebildet.

Die quer zur Axialrichtung gemessene Breite der Axialfläche der kreissegmentförmigen Aussparung beträgt rund 4 bis 10 mm, vorzugsweise 5 bis 8 mm. Definitionsgemäss ist die Breite von Radius zu Radius des runden an die Axialfläche angrenzenden Basisquerschnitts gemessen.

Die Aussparung beziehungsweise die Basisfläche der Aussparung ist vorzugsweise parallel zur Längsachse der Zahnbürste. Der Abstand zum Antriebsstift beträgt zwischen 2 und 7 mm vorzugsweise zwischen 3 und 5 mm.

Die in Axialrichtung gemessene Länge der genannten Axialfläche beträgt bevorzugt 6 bis 13 mm, vorzugsweise 8 bis 11 mm. Die Länge der Axialfläche entspricht bevorzugt der Länge des Axialkamms, wenn dieser mittig in der Axialfläche angeordnet ist.

Die Höhe der optionalen Führungserhebungen an der Kupplungshülse und am Führungszapfen, wie weiter unten noch beschrieben kann 0.4 bis 1.2 mm, insbesondere 0.6 bis 0.8 mm betragen.

Der Durchmesser des runden Basisquerschnitts kann 8 bis 13 mm, insbesondere 9.5 bis 11 mm betragen. Dieses Mass gilt sowohl für die Kupplungshülsen-Seite als auch für die Kupplungszapfen-Seite.

Der Basisquerschnitt zeigt auch auf, dass der effektive Umfang, der durch die Kupplungsmittel mit ihren Kupplungselementen geschaffen wird, zwischen 2 und 30% vorzugsweise zwischen 5 und 20% vergrössert ist. Durch diese "Mehrfläche" wird auch die Reibung vergrössert. Dies hat entsprechend höhere Abzugskräfte zur Folge.

Der Kupplungszapfen weist gemäss einer bevorzugten Weiterbildung der Erfindung eine Rastkerbe zur Herstellung einer Rastverbindung mit der oben beschriebenen Rastzunge an der Kupplungshülse des Aufsteckpflegeteils auf. Die Rastkerbe ist hierzu bevorzugt der ebenen Axialfläche gegenüber liegend angeordnet.

Der Kupplungszapfen weist gemäss einer bevorzugten Weiterbildung der Erfindung bezüglich seines runden Basisquerschnitts zwei Führungserhebungen auf. Diese stellen je einen axialen Führungsstreifen zur Führung in der oben beschriebenen axialen Führungsaufnahme an der Kupplungshülse des Aufsteckpflegeteils dar.

Da Kupplungshülse und Kupplungszapfen zusammenspielen, sind die Teile komplementär ausgebildet. Für die verschiedenen Eigenschaften bedeutet dies, dass sie so gestaltet sind, dass die Funktion möglich ist. So muss beispielsweise die Orientierung der Kupplungselemente gleich sein.

Gemäss einer weiteren Weiterentwicklung ist es möglich, dass mehrere Axialnuten oder Axialkämme an der Aussparung vorgesehen sind. Dabei ist es so, dass in der Aussparung am Kupplungszapfen nicht einheitlich nur Axialnuten oder Axialkämme realisiert werden können. Es ist auch möglich, dass in der Aussparung nebeneinander sowohl Axialnuten als auch Axialkämme angeordnet sind.

Falls mehrere Axialnuten und/oder Axialkämme eingesetzt werden, können diese bezüglich der Geometrie, Breite, Länge oder auch Höhe variieren. Vorzugsweise sind sie jedoch bezüglich ihrer Geometrie identisch ausgestaltet.

Die Erfindung betrifft ferner auch ein elektrisches Mundhygienegerät, insbesondere eine elektrische Zahnbürste, mit einem oben beschriebenen Aufsteckpflegeteil, insbesondere einem Aufsteckbürstenteil, sowie mit einem mit dem Aufsteckpflegeteil koppelbaren Handteil gemäss obiger Beschreibung.

Die oben beschriebene Kupplungshülse und der ebenfalls oben beschriebene Kupplungszapfen sind zur gegenseitigen formschlüssigen, axialen Aufnahme ausgebildet.

So bilden Axialkamm und Axialnut zwischen Kupplungshülse und Kupplungszapfen einen Formschluss aus. Auch der axiale Führungsstreifen am Kupplungszapfen bildet mit der axialen Führungsaufnahme des Aufsteckpflegeteils einen Formschluss auf. Ferner sind auch die beiden runden Grundquerschnitte des Aufsteckpflegeteils und des Handteils sowie die kreissegmentförmige Aussparung am Handteil und die kreissegmentförmige Wandverdickung am Aufsteckpflegeteil gegengleich und entsprechend formschlüssig zueinander ausgebildet.

Zwecks Ausbildung eines optimalen Formschlusses entspricht die Tiefe der Axialnut bevorzugt der Höhe des Axialkammes. Die Breite der Axialnut entspricht ebenfalls bevorzugt der Breite des Axialkammes. D.h., die Axialnut und der Axialkamm weisen eine gegengleiche Querschnittsgeometrie auf.

Bevorzugt weisen die Kupplungshülse und der Kupplungszapfen als Ganzes eine gegengleiche Querschnittsgeometrie auf.

Die Bemessung der Geometrien ist derart, dass die Konturen exakt gleich sind oder ein Über-/Untermass aufweisen, sodass sie sich leicht überschneiden und sich so aufgrund der elastischen Federeigenschaften des Materials der Kupplungshülse und des Kupplungszapfens im montierten Zustand direkt aneinander anpressen. Auf diese Weise wird eine grössere Reibung aufgebaut.

Die Verbindung zwischen Aufsteckpflegeteil und Handteil wird hergestellt, in dem der Kupplungszapfen und die Kupplungshülse in axialer Richtung zusammengeführt werden, wobei der Kupplungszapfen in die Kupplungshülse eingreift. Ein Anschlag für die Stirnfläche des Aufsteckpflegeteils, beispielsweise ausgebildet durch eine Ringschulter an der Basis des Kupplungszapfens, sorgt für eine Einschubbegrenzung.

Die kreissegmentförmige Aussparung am Handteil und die kreissegmentförmige Wandverdickung am Aufsteckpflegeteil sind bevorzugt auf der Vorderseite der Zahnbürste angeordnet. Die Vorderseite entspricht jener Seite, auf welcher das Reinigungselement, insbesondere das Borstenfeld, am Aufsteckpflegeteil angeordnet ist, bzw. an welcher bei der Benutzung der Daumen auf den Griffkörper aufgelegt wird. Die Rückseite entspricht der, der Vorderseite gegenüber liegenden Seite.

Eine Verdrehsicherung wird nun einerseits durch die miteinander korrespondierende kreisssegmentförmige Aussparung und Wandverdickung und andererseits durch die Kamm-Nutführung in der Axialfläche erreicht. Die genannten Elemente stellen auch sicher, dass das Aufsteckpflegeteil nur in einer bestimmten Ausrichtung auf das Handteil montiert werden kann.

Ist eine Rastzunge vorgesehen, so rastet diese beim Zusammenführen von Kupplungszapfen und Kupplungshülse über ihre Rastnase in die Rastkerbe am Handteil ein. Auf diese Weise wird eine axiale Sicherung der Verbindung erreicht. Die axiale Sicherung wird zusätzlich oder alternativ dazu auch über einen Reibschluss zwischen den Kupplungsteilen erreicht.

Die Rastkerbe, in welche die Rastnase einrastet, ist bevorzugt nur aus Hartkunststoff hergestellt. Es besteht jedoch die Möglichkeit im Bereich der Rastkerbe mindestens teilweise Weichkunststoff einzusetzen, beispielsweise um die Haftung zu verbessern. Der Weichkunststoff ist dabei vorzugsweise derart appliziert, dass eine entsprechende Rastnase in den Weichkunststoff "eintaucht" und diesen verdrängt.

Das Aufsteckpflegeteil und insbesondere die Kupplungshülse sowie das Gehäuse des Griffteils und der Kupplungszapfen bestehen bevorzugt in wesentlichen Teilen oder vollständig aus Kunststoff. Dieser Kunststoff kann ein Hartkunststoff oder eine Kombination von Hart- und Weichkunststoff sein. Die Kupplungshülse und der Kupplungszapfen bestehen bevorzugt aus einem Hartkunststoff.

Der Weichkunststoff kann dabei dekorativ oder funktionell eingesetzt werden, entsprechend ist er auf den Aussenflächen und/oder den Innenflächen angebracht.

Beispielhafte Möglichkeiten aus dem Bereich der Hartkunststoffe sind folgende Thermoplaste:
- Styrolpolymerisate wie Styrolacrylnitril (SAN), Polystyrol (PS), Acrylnitrylbutadienstyrol (ABS), Styrolmethylmethacrylate (SMMA) oder Styrolbutadien (SB);
- Polyolefine wie Polypropylen (PP) oder Polyethylen (PE) beispielsweise auch in den Formen high density Polyethylen (HDPE) oder low density Polyethylen (LDPE);
- Polyester wie Polyethylenterephtalat (PET) in Form von säuremodifiziertem Polyethylenterephtalat (PETA) oder glykolmodifiziertem Polyethylenterephtalat (PETG), Polybutylenterephthalat (PBT), säuremodifiziertes Polycyclohexylenedimethyleneterephthalate (PCT-A) oder glykolmodifiziertes Polycyclohexylenedimethyleneterephthalate (PCT-G);
- Cellulosederivate wie Celluloseacetat (CA), Celluloseacetobutyrat (CAB), Cellulosepropionat (CP), Celluloseacetatphtalat (CAP) oder Cellulosebutyrat (CB);
- Polyamide (PA) wie PA 6.6, PA 6.10 oder PA 6.12;
- Polymethylmethacrylat (PMMA);
- Polycarbonat (PC);
- Polyoxymethylen (POM);
- Polyvinylchlorid (PVC);
- Polyurethan (PUR).

Weiter können als Thermoplaste Polyethylen (PE) und Polyurethan (PU) eingesetzt werden, wie genannt als Hartkomponente oder auch als Weichkomponente.

Besonders gut geeignet als Hartkomponente ist PP, am meisten bevorzugt wird PP mit einem E-Modul von 1000 - 2400 N/mm², vorzugsweise 1300 bis 1800 N/mm².

Als Weichkomponente wird bevorzugt ein TPE-S eingesetzt. Die Shore A Härten der Weichkomponente liegen vorzugsweise unter 90 Shore A. Die Weichkomponenten bilden mit der Hartkomponente mittels Überspritzen im Zwei- oder Mehrkomponentenspritzgussverfahren einen Materialschluss. So besteht beispielsweise die Abdeckung der Bedienungseinheit (Schalter) am Griffkörper bevorzugt aus einer Weichkomponente.

Beispiele aus dem Bereich der Weichkomponenten sind thermoplastische Elastomere (TPE's), wie z. B.:
- Thermoplastische Polyurethan-Elastomere (TPE-U);
- Thermoplastische Styrol-Elastomere (TPE-S) wie beispielsweise ein Styrol-Ethylen-Butylen-Styrol-Copolymer (SEBS) oder Styrol-Butadien-Styrol-Copolymer (SBS);
- Thermoplastische Polyamid-Elastomere (TPE-A);
- Thermoplastische Polyolefin-Elastomere (TPE-O);
- Thermoplastische Polyester-Elastomere (TPE-E).

Ebenfalls einsetzbar sind sogenannte Biokunststoffe, Kunststoffe die aus nachwachsenden Rohstoffen hergestellt sind.

Als Materialien für die Herstellung von gespritzten Borsten eignen sich z. B.:
- Polyamid Elastomer (z.B. Grilflex ELG 5930 von Ems-Chemie AG)
- Polyester Elastomer (z.B. Riteflex 672 RF Nat oder Riteflex RKX 193 RF Nat von Ticona Polymers oder Hytrel 7248 von DuPont)

Die Borstenmaterialien haben z. B. eine Shore D Härte von 0 bis 100, vorzugsweise von 30 - 80.

Konventionell hergestellte Borsten (zugespitzt oder zylindrisch) sind vorzugsweise aus Polyamid (PA) oder Polyester (PBT).

Gummielastischen Massage- und Reinigungselementen am Bürstenkopf sind aus einer Weichkomponente, z. B. der oben genannten Art hergestellt.

Die Kupplungshülse wird vorzugsweise aus ABS, PP, PE oder PBT hergestellt. Der Kupplungszapfen besteht vorzugsweise aus PP oder POM und ist besonders bevorzugt glasverstärkt. Der Antriebsschaft besteht vorzugsweise aus glasverstärktem PA, beispielsweise aus PA 6.6 H2G50.

Das Aufsteckpflegeteil und insbesondere die Kupplungshülse werden bevorzugt in einem Spritzgiessverfahren hergestellt. Die Kupplungshülse wird hierbei bevorzugt integral mit dem Halskörper hergestellt.

Die Kupplungshülse kann jedoch auch als ein vom Halskörper unabhängiges Bauteil hergestellt und über eine Stoff-, Form- und/oder Kraftschlussverbindung mit dem Halskörper verbunden werden. In diesem Fall wird die Kupplungshülse bevorzugt unlösbar mit dem Halskörper verbunden.

Der Kupplungszapfen wird bevorzugt ebenfalls in einem Spritzgiessverfahren hergestellt.

Dank der erfindungsgemässen Kamm-Nut-Anordnung im Bereich der kreissegmentförmigen Aussparung am Kupplungszapfen und an der Wandverdickung der Kupplungshülse wird eine verbesserte Formschlussverbindung sowie eine verbesserte Verdrehsicherung erzielt.

Die Kamm-Nut-Verbindung bildet überdies eine verbesserte Führung beim Zusammenstecken und Trennen von Aufsatzpflegeteil und Handteil aus. Dadurch wird die Bedienerfreundlichkeit erhöht.

Ferner kann mit der erfindungsgemässen Anordnung verhindert werden, dass veraltete Modelle von Aufsteckpflegeteilen auf neue Modelle von Handteilen aufgesetzt werden. Dadurch kann eine funktionelle Beeinträchtigung oder gar die Beschädigung des Mundhygienegeräts ausgeschlossen werden.

Im Weiteren führt die Kamm-Nut-Anordnung zu einer grösseren Kontaktfläche zwischen der Kupplungshülse und dem Kupplungszapfen. Dadurch wird der Anteil des Reibschlusses an der Verbindung zwischen den beiden Teilen erhöht und die Kupplungsverbindung zwischen den beiden Teilen entsprechend verbessert. Dies erhöht die benötigte Abzugskraft zum Trennen der beiden Teile. Dadurch wird die Abzugssicherung deutlich verbessert. Dies ist insbesondere dann von Bedeutung, wenn keine zusätzliche Rastverbindung als Axialsicherung vorgesehen ist.

Weiter ist es möglich, die Bodenfläche der Axialnut und auch die Firstfläche des Axialkamms mit einer Rastgeometrie auszustatten beispielsweise einer Sägezahngeometrie, die die beiden Teile ineinander einrasten lässt. Die so geschaffene Verbindung kann lösbar oder unlösbar sein. Weiter kann die besagte Geometrie auch nur einseitig realisiert werden und so für ein verbessertes Abzugsgewicht sorgen.

Überdies kann die zusätzliche Kamm-Nut-Verbindung Torsionskräfte aufnehmen, was wiederum die Robustheit der Kupplungsverbindung bezüglich solcher Kräfte erhöht.

Ferner weist die erfindungsgemässe Anordnung von Formschlusselementen auch einen fertigungstechnischen Vorteil bezüglich der Herstellung des Aufsteckpflegeteils auf. Durch das Einbringen einer Axialnut in die kreissegmentförmige Wandverdickung wird die lokale Bauteildickstelle reduziert. Dies führt zu einer gleichmässigeren Aushärtung der Kupplungshülse im Anschluss an ein Spritzgiessverfahren und demzufolge zu einer verbesserten Fertigungspräzision mit kleineren Toleranzen.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine perspektivische Ansicht einer erfindungsgemässen elektrischen Zahnbürste;
- Figur 2a: eine Rückseitenansicht der Zahnbürste nach Figur 1;
- Figur 2b: eine Querschnittansicht des Aufsteckbürstenteils in gekoppeltem Zustand mit dem Handteil (nicht vollständig gezeigt) entlang der Schnittlinie F-F gemäss Figur 2a;
- Figur 3a: eine perspektivische Ansicht des vorderen Abschnittes des Handteils der elektrischen Zahnbürste gemäss den Figuren 1 und 2;
- Figur 3b: einen vergrösserten Ausschnitt aus dem Bereich des Kupplungszapfens gemäss Figur 3a;
- Figur 4a: eine Seitenansicht des Handteils der elektrischen Zahnbürste gemäss den Figuren 1 bis 3;
- Figur 4b: eine Querschnittansicht entlang der Schnittlinie E-E gemäss Figur 4a;
- Figur 5: eine perspektivische Ansicht des Aufsteckbürstenteils der elektrischen Zahnbürste gemäss den Figuren 1 bis 4 von hinten;
- Figur 6a: eine weitere perspektivische Ansicht des Aufsteckbürstenteils gemäss Figur 5;
- Figur 6b: einen vergrösserten Ausschnitt aus dem Bereich der Kupplungshülse gemäss Figur 6a;
- Figur 7a: eine Seitenansicht des Aufsteckbürstenteils gemäss den Figuren 5 und 6;
- Figur 7b: eine Querschnittansicht entlang der Schnittlinie G-G gemäss Figur 7a;
- Figur 8: eine Seitenansicht eines Handteils einer elektrischen Zahnbürste, die nicht Teil der vorliegenden Erfindung ist;
- Figur 9: eine perspektivische Ansicht des vorderen Abschnittes des Handteils gemäss Figur 8;
- Figur 10: eine weitere perspektivische Ansicht des vorderen Abschnittes des Handteils gemäss Figur 8 und 9;
- Figur 11a: eine Draufsicht des Handteils von vorne gemäss den Figuren 8 bis 10;
- Figur 11b: einen vergrösserten Ausschnitt aus dem Bereich des Kupplungszapfens gemäss Figur 11 a;
- Figur 12: eine perspektivische Ansicht des Aufsteckbürstenteils der elektrischen Zahnbürste gemäss den Figuren 8 bis 11;
- Figur 13: eine weitere perspektivische Ansicht des Aufsteckbürstenteils gemäss Figur 12;
- Figur 14a: eine Draufsicht des Aufsteckbürstenteils von hinten gemäss den Figuren 12 und 13;
- Figur 14b: einen vergrösserten Ausschnitt aus dem Bereich der Kupplungshülse gemäss Figur 14a;
- Figur 15: eine Draufsicht des Bürstenkopfs eines Aufsteckbürstenteils das nicht Teil der vorliegenden Erfindung ist;
- Figur 16: einen Teil-Längsschnitt des Bürstenkopfs nach Figur 15;
- Figur 17: eine Draufsicht des Bürstenkopfs eines Aufsteckbürstenteils das nicht Teil der vorliegenden Erfindung ist;
- Figur 18: eine Seitenansicht des Bürstenkopfs nach Figur 17;
- Figur 19: eine Draufsicht des Bürstenkopfs eines Aufsteckbürstenteils das nicht Teil der vorliegenden Erfindung ist;
- Figur 20: eine Draufsicht des Bürstenkopfs eines Aufsteckbürstenteils das nicht Teil der vorliegenden Erfindung ist;
- Figur 21: eine Draufsicht des Bürstenkopfs eines Aufsteckbürstenteils das nicht Teil der vorliegenden Erfindung ist;
- Figur 22: eine Querschnittansicht einer alternativen Ausführungsform einer Kupplungshülse, die nicht Teil der vorliegenden Erfindung ist.

Grundsätzlich sind in den Figuren gleiche Teile mit gleichen Bezugszeichen versehen.

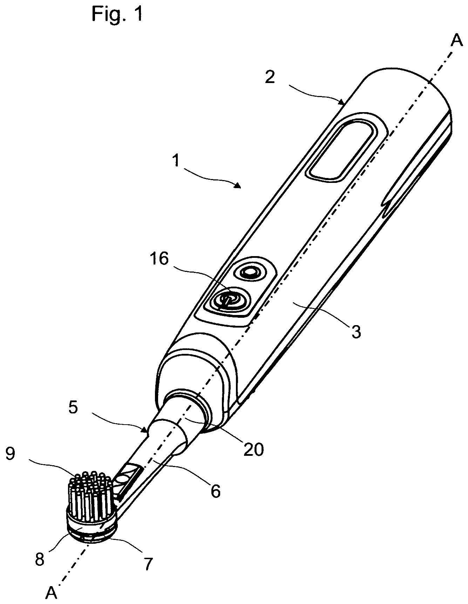

Die Figuren 1 bis 7 zeigen eine bevorzugte Ausführungsform eines erfindungsgemässen Aufsteckbürstenteils 5 und eines erfindungsgemässen Handteils 2 sowie einer daraus gebildeten Zahnbürste 1.

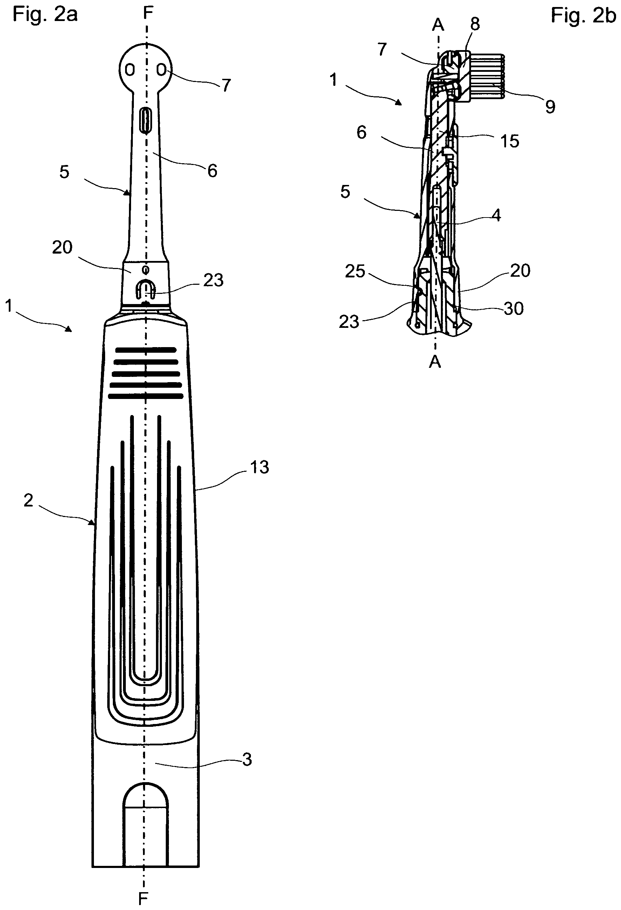

Die Figuren 1, 2a und 2b zeigen die Zahnbürste 1 in montiertem Zustand, d.h. heisst, die Aufsteckbürstenteil 5 und das Handteil 2 sind über ihre Kupplungsmittel 20, 30 miteinander verbunden.

Das Handteil 2 umfasst einen Griffkörper 3 mit einem Kunststoffgehäuse 13, welches einen elektromotorischen Antrieb (nicht gezeigt) zum Antreiben eines aus dem Griffkörper 3 geführten Antriebsstifts 4 sowie einen Akkumulator (nicht gezeigt) zum Speichern der für den Betrieb benötigten elektrischen Energie aufnimmt. Ferner nimmt das Gehäuse 13 auch eine Bedieneinheit 16 zum Ein- und Ausschalten der Zahnbürste 1 sowie gegebenenfalls eine Steuerungselektronik (nicht gezeigt) auf.

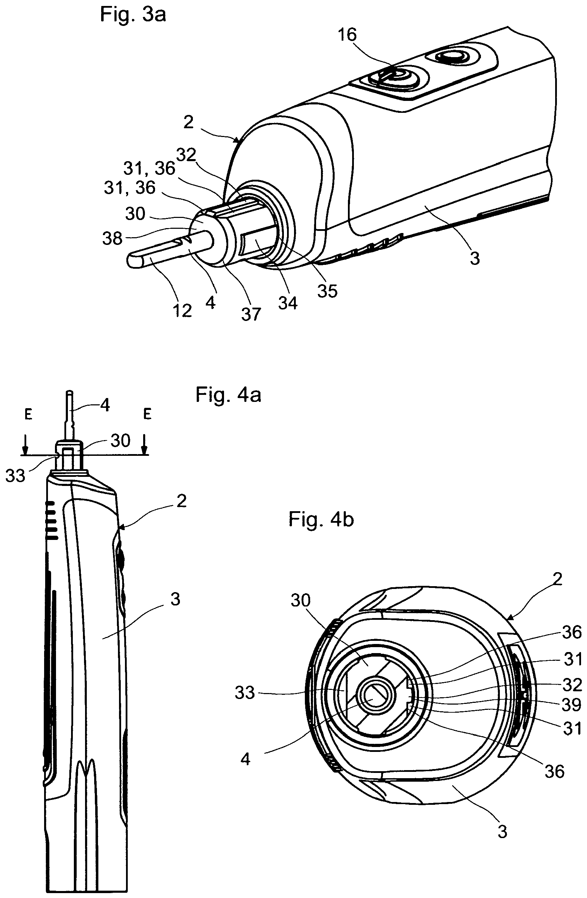

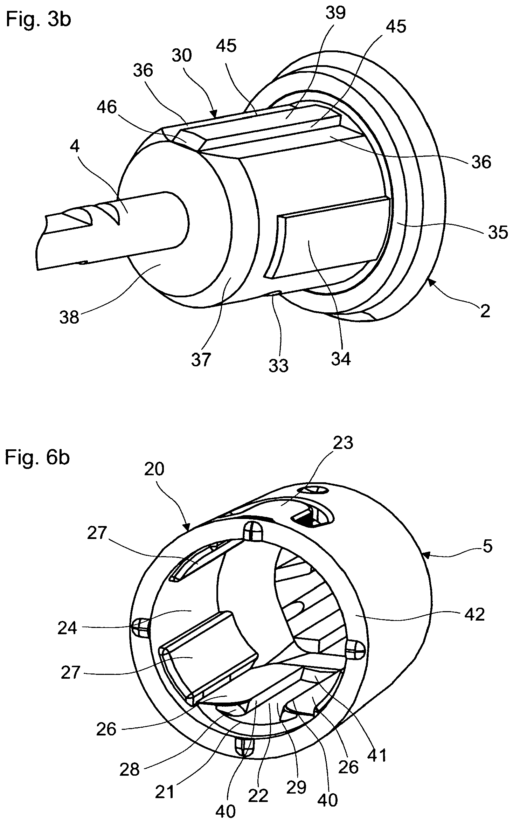

Das Handteil 2 enthält ferner einen in Axialrichtung stirnseitig an den Griffkörper 3 anschliessenden Kupplungszapfen 30. Der oben erwähnte Antriebsstift 4 ist axial aus dem Kupplungszapfen 30 herausgeführt (siehe auch Figur 3a, 3b und 4a).

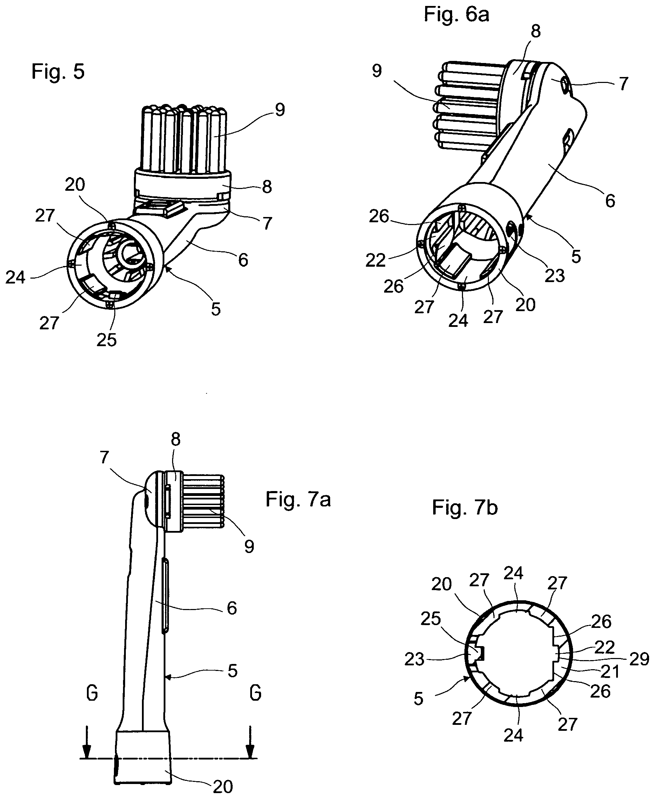

Das Aufsteckbürstenteil 5 umfasst einen Bürstenkopf 7, eine Kupplungshülse 20 sowie einen den Bürstenkopf 7 und die Kupplungshülse 20 miteinander verbindenden, rohrförmigen Halskörper 6 (siehe auch Figur 5 bis 7). Der Halskörper 6 ist zum Bürstenkopf 7 hin leicht konisch ausgebildet. Halskörper 6 und Kupplungshülse 20 sind als integrale Einheit ausgebildet.

Der Bürstenkopf 7 beinhaltet einen reversierend rotierbaren Borstenträger 8, auf welchem ein Borstenfeld 9 angeordnet ist.

In gekoppeltem Zustand von Aufsteckbürstenteil 5 und Handteil 2, d.h. wenn das Aufsteckbürstenteil 5 über die Kupplungshülse 20 auf den Kupplungszapfen 30 des Handteils 2 aufgesetzt ist, greift der Antriebsstift 4 in den rohrförmigen Hohlraum des Halskörpers 6 ein und verbindet sich dort mit den allfälligen weiteren funktionellen Bauteilen zur Umsetzung der gewünschten Bewegung (siehe Figur 2b).

Der Antriebsstift 4 weist einen zweiseitig abgeflachten Endabschnitt 12 auf, welcher. in montiertem Zustand mit einem Antriebsschaft 15 im Aufsteckbürstenteil 5 in mechanischer Wirkverbindung steht. Der Endabschnitt 12 ist mit dem Antriebsschaft 15 formschlüssig verbunden, wobei die beidseitige Abflachung am Endabschnitt 12 für eine Verdrehsicherung sorgt.

Die mechanische Antriebsenergie wird vom Antriebsstift 4 auf den Antriebsschaft 15 übertragen. Der Antriebsschaft 15 wiederum übersetzt die mechanische Antriebsenergie in eine reversierende Rotationsbewegung des Borstenträgers 8.

Der Hohlraum der Kupplungshülse 20 des Aufsteckbürstenteils 5 weist einen kreisförmigen Basisquerschnitt auf. Die Kupplungshülse 20 weist ferner zur Vorderseite des Aufsteckbürstenteils 5 hin eine bezüglich des kreisförmigen Basisquerschnitts kreissegmentförmige Wandverdickung 21 mit einer zum Hohlraum der Kupplungshülse 20 weisenden, ebenen Axialfläche 26 auf. Die Wandverdickung 21 bildet eine Querschnittsverengung im Hohlraum der Kupplungshülse 20 aus.

Mittig in der ebenen Axialfläche 26 ist eine Axialnut 22 zur Aufnahme eines Axialkammes 32 des Handteils 2 eingelassen. Die Axialnut 22 weist zur Stirnfläche 42 der Kupplungshülse 20 hin einen trichterförmigen Einlauf 28 auf. Die Axialnut 22 ist zusammengesetzt aus den Nut-Seitenflächen 40, der Nut-Stirnendfläche 41 sowie der Bodenfläche 29 (siehe Figur 6b).

Die Kupplungshülse 20 enthält ferner eine der Wandverdickung 21 gegenüber liegende, also zur Rückseite hin angeordnete, Rastzunge 23 mit einer nach innen zum Hohlraum der Kupplungshülse 20 gerichteten Rastnase 25 zum Einrasten in eine Rastkerbe 33 am Kupplungszapfen 30 eines Handteils 2.

Die Rastzunge 23 ist als Teil der Kupplungshülse 20 ausgebildet und über einen Verbindungsabschnitt radial aus der Kupplungshülse 20 federelastisch biegbar. Die Rastzunge 23 ist hierzu ausserhalb des Verbindungsabschnittes über einen spaltförmigen Durchbruch von der umgebenden Hülsenwand abgetrennt.

Die Kupplungshülse 20 bildet ferner entlang ihres Innenumfanges jeweils zwischen der Wandverdickung 21 und der dieser gegenüber liegenden Rastzunge 23 bezüglich des runden Basisquerschnitts jeweils, das heisst pro Seite zwei axial ausgerichtete, streifenförmige Führungserhebungen 27 aus, welche eine axiale Führungsaufnahme 24 in Form einer Vertiefung 24 für eine ebenfalls axial ausgerichtete, streifenförmige Führungserhebung 34 am Kupplungszapfen 30 des korrespondierenden Handteils 2 einschliessen. Die beiden Paare von axialen Führungsaufnahmen 24 liegen einander ebenfalls gegenüber.

Der öffnungsseitige Ansatz der genannten Wandverdickung 21 sowie der Führungserhebungen 27 ist gegenüber der Stirnfläche 42 der Kupplungshülse 20 zurückversetzt.

Der Kupplungszapfen 30 des Handteils 2 weist ebenfalls einen kreisförmigen Basisquerschnitt auf. Aus seiner endseitigen Stirnfläche 38 tritt der Antriebsstift 4 aus. Der Kupplungszapfen 30 enthält auf der Vorderseite des Handteils 2 eine bezüglich des kreisförmigen Basisquerschnitts kreissegmentförmige Aussparung 31, welche am Aussenumfang des Kupplungszapfens 30 eine ebene Axialfläche 36 ausbildet. Mittig in der ebenen Axialfläche 36 ist ein Axialkamm 32 angeordnet. Der Axialkamm 32 besteht aus den Kamm-Seitenflächen 45, der Kamm-Stirnendfläche 46 sowie der Firstfläche 39.

Der Kupplungszapfen 30 weist ferner eine der Aussparung 31 gegenüber liegende Rastkerbe 33 zur Herstellung einer Rastverbindung mit der oben beschriebenen Rastzunge 23 an der Kupplungshülse 20 auf. Die Rastkerbe 33 verläuft quer zur Axialrichtung A des Handteils 2.

Im Weiteren weist der Kupplungszapfen 30 bezüglich seines kreisförmigen Basisquerschnitts zwischen der Aussparung 31 und der Rastkerbe 33 jeweils, d.h. beidseitig, eine axiale Führungserhebung 34 in Form eines axialen Führungsstreifens auf, zur Führung in der oben beschriebenen axialen Führungsaufnahme 24 an der Kupplungshülse 20 des Aufsteckbürstenteils 2.

Beim Zusammenführen des Aufsteckbürstenteils 5 mit dem Handteil 2 werden Kupplungszapfen 30 und Kupplungshülse 20 zusammengeführt, wobei der Kupplungszapfen 30 in die Kupplungshülse 20 eingreift. Hierzu sind die ebenen Axialflächen 26, 36 und dementsprechend auch die Axialnut 22 und der Axialkamm 32 aufeinander ausgerichtet.

Während des Zusammenführens der beiden Teile 20, 30 wird der Axialkamm 32 am Kupplungszapfen 30 in Axialrichtung A über den Einlauf 28 in die Axialnut 22 an der Kupplungshülse 20 eingeführt. Gleichzeitig werden die Führungserhebungen 34 des Kupplungszapfens 30 in die korrespondierenden Führungsaufnahmen 24 an der Kupplungshülse 20 eingeführt. Beim fortgesetzten Zusammenführen der beiden Teile 20, 30 gleiten nun der Axialkamm 32 in der Axialnut 22 sowie die Führungserhebungen 34 in den Führungsaufnahmen 24.

Während der Zusammenführung wird die Rastzunge 23 durch den in die Kupplungshülse 20 eindringenden Kupplungszapfen 30 wegen der in den Hohlraum vorstehenden Rastnase 25 federnd radial nach aussen gedrückt. Sobald die Rastkerbe 33 am Kupplungszapfen 30 auf Höhe der Rastnase 25 zu liegen kommt, rastet Letztere in die Rastkerbe 33 ein und die beiden Teile sind gegen eine axiale Verschiebung gesichert. Diese axiale Sicherung kann nur durch kräftiges Auseinanderziehen der beiden Bauteile wieder gelöst werden. Hierzu bedarf es jedoch einer gewissen Entriegelungskraft zum Herausführen der Rastnase 25 aus der Rastkerbe 33. Dadurch wird ein unabsichtliches Auseinanderziehen der beiden Teile verhindert.

Der Kupplungszapfen 30 wird zum Griffkörper 3 hin von einer Ringschulter 35 umfasst, welche einen Anschlag für die öffnungsseitige Stirnfläche 42 der Kupplungshülse 20 ausbildet.

Der Kupplungszapfen 30 bildet zu seiner endseitigen Stirnfläche 38 hin überdies eine Fase 37 aus.

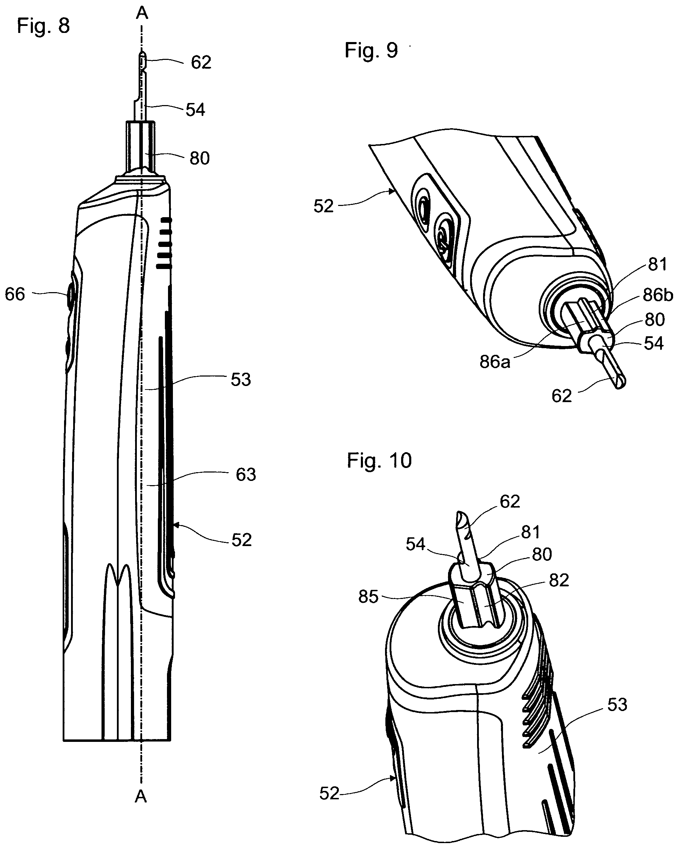

Die Figuren 8 bis 14 zeigen eine weitere Ausführungsform eines Aufsteckbürstenteils 55 und eines Handteils 52 einer daraus gebildeten Zahnbürste, die nicht Teil der vorliegenden Erfindung ist.

Das Handteil 52 umfasst ein Griffkörper 53 mit einem Kunststoffgehäuse 63, welches einen elektromotorischen Antrieb zum Antreiben eines aus dem Griffkörper 53 geführten Antriebsstifts 54 sowie einen Akkumulator zum Speichern der für den Betrieb benötigten elektrischen Energie aufnimmt. Ferner nimmt das Gehäuse 63 auch eine Bedieneinheit 66 zum Ein- und Ausschalten der Zahnbürste sowie gegebenenfalls eine Steuerungselektronik auf.

Das Handteil 52 enthält ferner einen in Axialrichtung stirnseitig an den Griffkörper 53 anschliessenden Kupplungszapfen 80. Der oben erwähnte Antriebsstift 54 ist axial aus dem Kupplungszapfen 80 herausgeführt (siehe auch Figur 9 und 10).

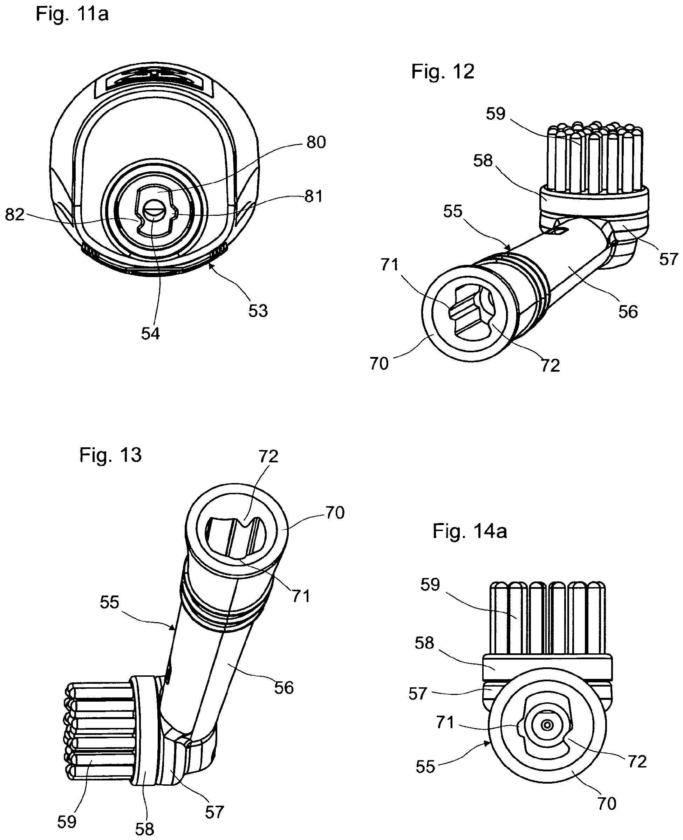

Das Aufsteckbürstenteil 55 umfasst einen Bürstenkopf 57, eine Kupplungshülse 70 sowie einen den Bürstenkopf 57 und die Kupplungshülse 70 miteinander verbindenden rohrförmigen Halskörper 56 (siehe auch Figur 12 bis 14). Der Halskörper 56 ist zum Bürstenkopf 57 hin leicht konisch ausgebildet. Halskörper 56 und Kupplungshülse 70 sind als integrale Einheit ausgebildet.

Der Bürstenkopf 57 beinhaltet einen reversierend rotierbaren Borstenträger 58, auf welchem ein Borstenfeld 59 angeordnet ist.

In gekoppeltem Zustand von Aufsteckbürstenteil 55 und Handteil 52, d.h. wenn das Aufsteckbürstenteil 55 über die Kupplungshülse 70 auf den Kupplungszapfen 80 des Handteils 52 aufgesetzt ist, greift der Antriebsstift 54 in den rohrförmigen Hohlraum des Halskörpers 56 ein.

Der Antriebsstift 54 weist einen abgeflachten Endabschnitt 62 auf, welcher im Querschnitt vorzugsweise halbkreisförmig ist. Der Endabschnitt 62 steht in montiertem Zustand mit einem Antriebsschaft im Aufsteckbürstenteil 55 (nicht gezeigt) in mechanischer Wirkverbindung. Der Endabschnitt 62 ist mit dem Antriebsschaft formschlüssig verbunden, wobei die Abflachung am Endabschnitt 62 für eine Verdrehsicherung sorgt.

Die mechanische Antriebsenergie wird vom Antriebsstift 54 auf den Antriebsschaft übertragen. Der Antriebsschaft wiederum übersetzt die mechanische Antriebsenergie in eine reversierende Rotationsbewegung des Borstenträgers 58.

Der Hohlraum der Kupplungshülse 70 des Aufsteckbürstenteils 55 weist einen rechteckförmigen Basisquerschnitt mit jeweils zwei einander gegenüber liegenden Längsseiten 75, 76 und Kurzseiten 73, 74 auf.

Der Basisquerschnitt hat eine Höhe zwischen den Kurzseiten von 5 bis 10 mm, vorzugsweise von 6.5 bis 8.5 mm. Die Breite zwischen den Längsseiten beträgt zwischen 3 und 8 mm, vorzugsweise zwischen 4.5 und 6.5 mm.

Die Kurzseiten 73, 74 sind entsprechend kürzer ausgebildet als die Längsseiten 75, 76. Die Kurz- und Längsseiten schliessen jeweils eine Kante ein, welche den Übergang zwischen einer Kurz- und Längsseite festlegt.

Die Flächen der Kurzseiten 73, 74 sind radial nach aussen leicht gewölbt ausgebildet. Sie können jedoch auch eben ausgebildet sein. Ferner können die Flächen der Kurzseiten 73, 74 im Querschnitt auch zur Mitte hin schräg nach aussen verlaufende, ebene Teilflächen ausbilden.

Die Flächen der Längsseiten 75, 76 sind bevorzugt eben ausgebildet. Die Flächen der Längsseiten 75, 76 können jedoch auch nach aussen leicht gewölbt ausgebildet sein.

Eine erste Längsseite 75 enthält im unteren Bereich, d.h. in dem der Rückseite des Aufsteckbürstenteils 55 näheren Längsseitenabschnitt, einen zum Hohlraum der Kupplungshülse 70 weisenden axialen Hülsenkamm 72. Der Hülsenkamm 72 zeichnet sich durch zwei zur Firstfläche des Hülsenkammes 72 aufeinander zu laufenden Seitenflächen auf. Die Firstfläche des Hülsenkamms 72 ist schmal und nach aussen gewölbt ausgebildet. Der Hülsenkamm 72 bildet so eine dreieckförmige Querschnittsform aus.

Die Breite der Basis des Hülsenkammes 72 beträgt 1.5 bis 4 mm, vorzugsweise 1.8 bis 3 mm. Die Höhe des Hülsenkammes 72 beträgt 0.7 bis 2 mm, vorzugsweise 0.9 bis 1.5 mm.

Die der ersten Längsseite 75 gegenüber liegende zweite Längsseite 76 weist eine etwa mittig zwischen den Kanten zu den Kurzseiten 73, 74 angeordnete axiale Hülsennut 71 auf. Seitlich von der Hülsennut 71 ist ein erster und zweiter Längsseitenabschnitt 76a, 76b angeordnet. Die Längsseitenabschnitte 76a, 76b bilden zur Hülsennut 71 hin leicht schräg nach aussen geneigte Teilflächen aus.

Die Hülsennut 71 weist eine Bodenfläche sowie seitlich davon angeordnete Seitenflächen auf. Die Bodenfläche ist eben oder leicht nach aussen gewölbt ausgebildet. Die Seitenflächen sind ausgehend von der Bodenfläche schräg nach aussen geneigt. Die Hülsennut 71 bildet so einen trapezförmigen Querschnitt aus.

Die Hülsennut hat eine Breite von 1.5 bis 4 mm, vorzugsweise von 1.8 bis 3 mm. Die Tiefe der Hülsennut beträgt 0.7 bis 2 mm, vorzugsweise 0.9 bis 1.5 mm.

Die Breite der Bodenfläche der Hülsennut und die dazugehörigen Seitenflächen sind so bemessen, dass die Hülsennut 71 jeweils den axialen Zapfenkamm 81 unterschiedlicher Handteile aufnehmen kann.

Die besagten Handteile zeichnen sich dadurch aus, dass der betreffende Zapfenkamm 81 an leicht verschiedenen Positionen, jedoch entlang eines bestimmten Abschnittsbereichs um die Mitte der korrespondierenden Längsseite des Kupplungszapfens 80 angeordnet ist. Die Breite der Basis des betreffenden Zapfenkammes ist dabei kleiner als die öffnungsseitige Breite der betreffenden Hülsennut 71. Sind Zapfenkamm 81 und Hülsennut 71 exakt aufeinander ausgerichtet, so können diese auch dieselben Abmessungen aufweisen, d.h., gegengleich ausgebildet sein (siehe Figur 8 bis 14). Die Tiefe der Hülsennut 71 entspricht bevorzugt der Höhe des korrespondierenden Zapfenkammes 81 oder ist tiefer.

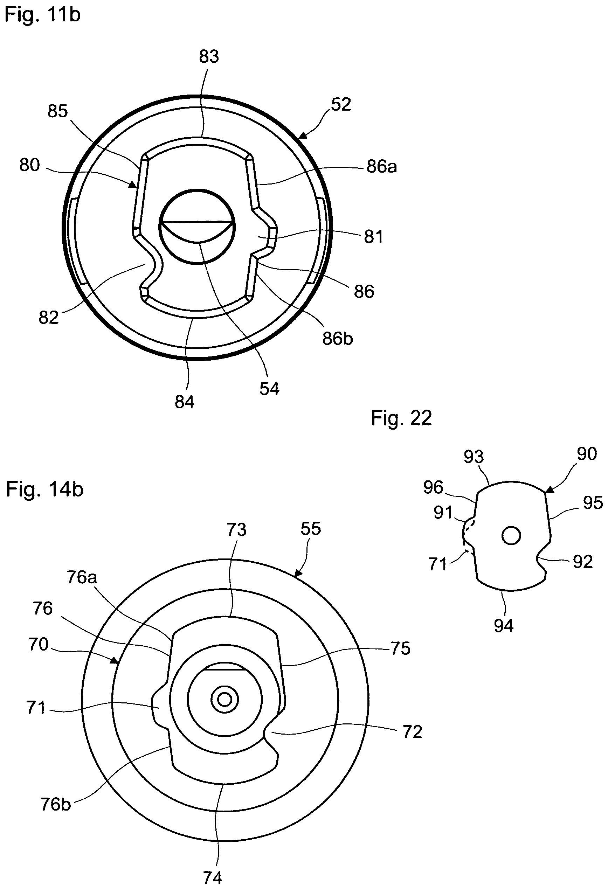

Die Figur 22 zeigt eine alternative Ausführungsform der oben beschriebenen Kupplungshülse, die nicht Teil der vorliegenden Erfindung ist. Die Kupplungshülse 90 weist einen analogen Basisquerschnitt auf, wie die oben beschriebene Kupplungshülse 71 gemäss Figur 12 bis 14. Entsprechend wird auf die Beschreibung zu Figur 12 bis 14 verwiesen.

Der Hohlraum der Kupplungshülse 90 weist jeweils eine erste und zweite Längsseite 95, 96 sowie eine erste und zweite Kurzseite 93, 94 auf. Die Längsseiten 95, 96 bzw. die Kurzseiten 93, 94 liegen einander jeweils gegenüber.

Eine erste Längsseite 95 enthält im unteren Bereich, d.h. in dem der Rückseite des Aufsteckbürstenteils näheren Längsseitenabschnitt, einen zum Hohlraum der Kupplungshülse 90 weisenden axialen Hülsenkamm 92. Der Hülsenkamm 92 zeichnet sich durch zwei zur Firstfläche des Hülsenkammes 92 aufeinander zu laufenden Seitenflächen auf. Die Firstfläche des Hülsenkamms 92 ist schmal und nach aussen gewölbt ausgebildet. Der Hülsenkamm 92 bildet so eine dreieckförmige Querschnittsform aus.

Die der ersten Längsseite 95 gegenüber liegende zweite Längsseite 96 weist eine in einem etwa mittigen Bereich zwischen den Kanten zu den Kurzseiten 93, 94 angeordnete axiale Hülsennut 91 auf. Seitlich von der Hülsennut 91 ist ein erster und zweiter Längsseitenabschnitt angeordnet. Die Längsseitenabschnitte bilden zur Hülsennut 91 hin leicht schräg nach aussen geneigte Teilflächen aus.

Die Hülsennut 91 weist eine Bodenfläche sowie seitlich davon angeordnete Seitenflächen auf. Die Seitenflächen sind ausgehend von der Bodenfläche schräg nach aussen geneigt. Die Hülsennut 91 bildet so einen trapezförmigen Querschnitt aus. Die gezeigte Alternativform gemäss Figur 22 unterscheidet sich von der Ausführungsform nach Figur 12 bis 14, die nicht Teil der vorliegenden Erfindung ist, dadurch, dass die Hülsennut 91 etwas zur ersten

Kurzseite 93 hin verschoben angeordnet ist. In Figur 22 ist zum Vergleich die Kontur der Hülsennut 71 gemäss dem Ausführungsbeispiel nach Figur 12 bis 14 gestrichelt dargestellt. Hieraus wird die Verschiebung der Hülsennut 91 zur ersten Kurzseite 93 hin besonders gut ersichtlich.

Die Geometrie, Abmessung und Position der Hülsennut 71, 91 entlang der zweiten Längsseite 96 ist vorzugsweise so gewählt, dass die Aufsteckbürstenteile für verschiedene Handteile mit entlang der zweiten Längsseite unterschiedlich angeordneten sowie unterschiedlich dimensionierten Nutenkämmen kompatibel sind.

Der Kupplungszapfen 80 des Handteils 52 weist ebenfalls einen rechteckförmigen Basisquerschnitt mit jeweils zwei einander gegenüber liegenden Längsseiten 85, 86 und Kurzseiten 83, 84 auf. Der Basisquerschnitt des Kupplungszapfens 80 ist gegengleich zum Basisquerschnitt der Kupplungshülse 70 ausgebildet, d.h. er weist dieselben Abmessungen auf.

Die Kurzseiten 83, 84 sind entsprechend kürzer ausgebildet als die Längsseiten 85, 86. Die Kurz- und Längsseiten schliessen jeweils eine Kante ein, welche den Übergang zwischen einer Kurz- und Längsseite festlegt.

Die Flächen der Kurzseiten 83, 84 sind nach aussen leicht gewölbt ausgebildet. Sie können jedoch auch eben ausgebildet sein. Ferner können die Flächen der Kurzseiten 83, 84 im Querschnitt auch zur Mitte hin schräg nach aussen verlaufende, ebene Teilflächen ausbilden.

Die Flächen der Längsseiten 85, 86 sind bevorzugt eben ausgebildet. Die Flächen der Längseiten 85, 86 können jedoch auch nach aussen leicht gewölbt ausgebildet sein.

Eine erste Längsseite 85 enthält im unteren Bereich, d.h. in dem der Rückseite des Handteils 52 näheren Längsseitenabschnitt, eine axiale Zapfennut 82. Die axiale Zapfennut 82 zeichnet sich durch zwei zur Bodenfläche der Zapfennut 82 aufeinander zulaufende Seitenflächen auf. Die Bodenfläche der Zapfennut 82 ist schmale und gewölbt ausgebildet. Die axiale Zapfennut 82 bildet so eine dreieckförmige Querschnittsform aus. Die Breite der Zapfennut 82 an ihrer Basis beträgt 1.5 bis 4 mm, vorzugsweise 1.8 bis 3 mm.

Die Höhe der Zapfennut 82 beträgt 0.7 bis 2 mm, vorzugsweise 0.9 bis 1.5 mm. Die axiale Zapfennut 82 ist gegengleich zum axialen Hülsenkamm 72 ausgebildet.

Die Hülsennut hat eine Breite von 1.5 bis 4 mm, vorzugsweise von 1.8 bis 3 mm. Die Höhe der Hülsennut beträgt 0.7 bis 2 mm, vorzugsweise 0.9 bis 1.5 mm.

Die der ersten Längsseite 85 gegenüber liegende zweite Längsseite 86 weist einen etwa mittig angeordneten axialen Zapfenkamm 81 auf. Seitlich des Zapfenkamms 81 ist ein erster und zweiter Längsseitenabschnitt 86a, 86b angeordnet. Die Längsseitenabschnitte 86a, 86b bilden zum axialen Zapfenkamm 81 hin leicht schräg nach aussen geneigte Teilflächen aus.

Der axiale Zapfenkamm 81 gemäss dem vorliegenden Ausführungsbeispiel weist eine Firstfläche sowie seitlich davon angeordnete Seitenflächen auf. Die Firstfläche ist eben oder leicht nach aussen gewölbt ausgebildet. Die Seitenflächen sind ausgehend von der Bodenfläche zur Firstfläche hin schräg nach innen geneigt. Der axiale Zapfenkamm 81 bildet so einen trapezförmigen Querschnitt aus. Der axiale Zapfenkamm 81 ist gegengleich zur axialen Hülsennut 71 ausgebildet.

Die Höhe des Zapfenkammes 81 entspricht der Tiefe der korrespondierenden Hülsennut 71 oder ist kleiner. Die Tiefe der Zapfennut 82 entspricht der Höhe des korrespondierenden Hülsenkammes 72 oder ist grösser. Die Tiefe beträgt zwischen 1.5 und 4 mm, vorzugsweise zwischen 1.8 und 3 mm. Die Höhe des Zapfenkamms beträgt von 0.7 bis 2 mm vorzugsweise 0.9 bis 1.5 mm.

Neben der formschlüssigen Geometrie, welche die Reibung schafft, um das Abzugsgewicht zu erhöhen, kann es alternative Kupplungselemente geben, die das Abzugsgewicht erhöhen. Beispielsweise Rastungen wie sie bereits im Zusammenhang mit den Figuren 1 bis 7 gezeigt sind oder auch Rastungen, die so realisiert sind, dass diese direkt auf den Antriebsstift drücken.

Die Realisierung dieser Schnittstelle in der Kupplungshülse kann wiederum auf verschiedene Weise erfolgen. Beispielsweise kann die Kupplungshülse, wie im Zusammenhang mit den vorherigen Figuren, beschrieben integral mit dem Halskörper oder als separates Teil zum Halskörper ausgebildet sein.

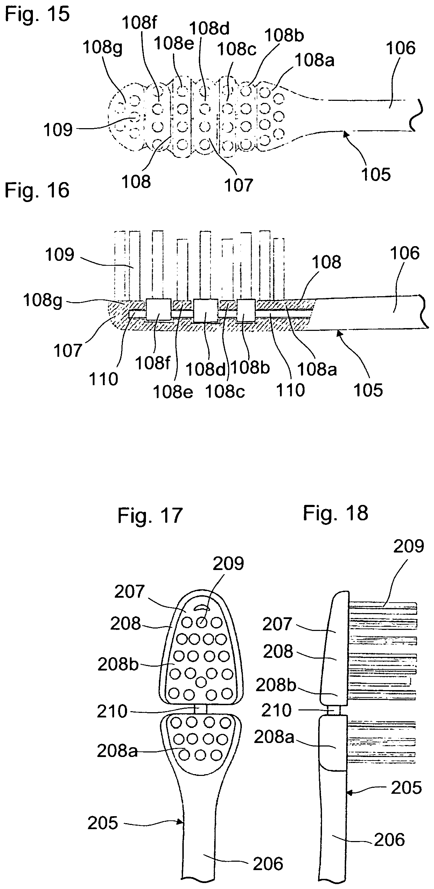

Die Figuren 15 bis 21 zeigen verschiedene Typen von Aufsteckbürstenteilen, die nicht Teil der vorliegenden Erfindung sind. Die Aufsteckbürstenteile unterscheiden sich durch die unterschiedliche Ausgestaltung des jeweiligen Bürstenkopfes.

Die Aufsteckbürstenteile 105, 205 gemäss den Figuren 15 bis 18 enthalten jeweils einen Halskörper 106, 206, welcher an einem Ende eine Kupplungshülse trägt (nicht gezeigt). Die Kupplungshülse ist gemäss Erfindung ausgestaltet und mit dem Kupplungszapfen eines ebenfalls gemäss Erfindung korrespondierenden Handteils axial verbindbar. Am anderen Ende schliesst jeweils ein Bürstenkopf 107, 207 an den Halskörper 106, 206 an. Der Bürstenkopf 107, 207 enthält jeweils einen Borstenträger 108, 208. Der Borstenträger 108, 208 bildet jeweils die Trägerstruktur für das Borstenfeld 109, 209 aus.

Der Borstenträger 108 gemäss der Ausführungsform nach Figur 15 und 16 ist mehrteilig ausgebildet und umfasst entlang der Längsachse des Aufsteckbürstenteils 105 alternierend stationäre Trägermodule 108a, 108c, 108e, 108g und schwenkend bewegbare Trägermodule 108b, 108d, 108f. Die bewegbaren Trägermodule 108b, 108d, 108f sind drehfest mit einer Bewegungsachse 110 verbunden. Bei einem auf den Griffkörper (nicht gezeigt) aufgesteckten Aufsteckbürstenteil 105 und bei aktiviertem Betriebszustand der elektrischen Zahnbürste schwenken die bewegbaren Trägermodule 108b, 108d, 108f relativ gegenüber den stationären Trägermodule 108a, 108c, 108e, 108g reversierend, so dass die jeweils an ihnen befestigten Teile des Borstenfeldes 109 ebenfalls relative Schwenkbewegungen zueinander ausführen. Auf diese Weise wird ein besonderer Reinigungseffekt erzielt.

Bezüglich der Ausgestaltung des Borstenfeldes 109 bietet es sich an, dass wie gezeigt höhere und tiefere Kämme von Borstenbündeln eingesetzt werden. So sind die bewegbaren Trägermodule 108b, 108d, 108f beispielsweise wie gezeigt mit höheren Kämmen ausgestattet.

Am Halskörper 106 ist eine Kupplungshülse ausgebildet, welche den Halskörper gegenüber dem Handteil fixiert, so dass die Bewegung der schwenkenden Trägermodulen gegenüber den stationären Trägermodulen möglich wird (nicht gezeigt).

Der Borstenträger 208 gemäss der Ausführungsform nach Figur 17 und 18 ist mehrteilig ausgebildet und umfasst ein halsseitig angeordnetes, stationäres erstes Trägermodul 208a sowie ein über eine Bewegungsachse 210 mit diesem verbundenen, kopfendseitig angeordnetes zweites Trägermodul 208b.

Das zweite Trägermodul 208b ist über die Bewegungsachse 210 gegenüber dem ersten Trägermodul 208a bewegbar, insbesondere schwenkbar.

Das schwenkend bewegbare zweite Trägermodul 208b ist drehfest mit der Bewegungsachse 210 verbunden und wird im aktiven Betriebszustand der elektrischen Zahnbürste aufgrund einer mechanischen Kopplung mit einem Antriebsstift gegenüber dem Halskörper 206 und dem ersten Trägermodul 208a ausgelenkt.

Das Borstenfeld 209 ist wiederum auf dem Borstenträger 208 beziehungsweise auf dem ersten und zweiten Trägermodul 208a, 208b angeordnet. Es bewegt sich zusammen mit dem Borstenträger. Der Halskörper 206 mit Kupplungshülse ist wiederum mit dem Handteil verbunden.

Die Bewegungsachse 210 kann überdies flexibel ausgebildet sein, so dass das bewegliche zweite Trägermodul 208b bei zu hohem Putzdruck flexibel gegenüber dem stationären ersten Trägermodul 208a ausgelenkt werden kann.

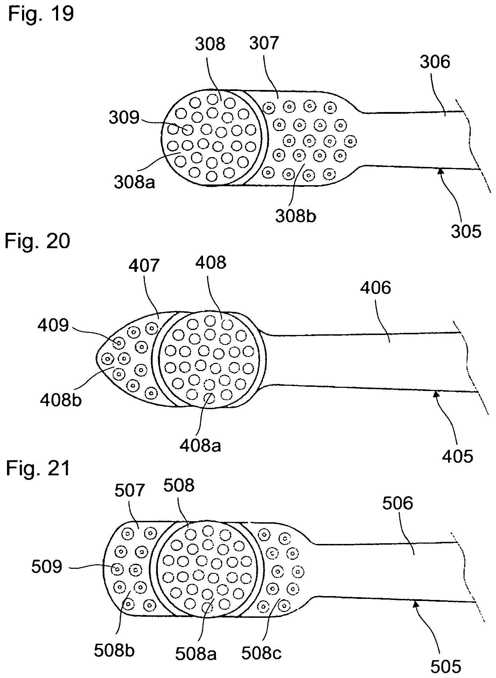

Die Aufsteckbürstenteile 305, 405, 505 gemäss den Figuren 19 bis 21 gehören zu den so genannten Rotationszahnbürsten. Sie enthalten jeweils ein Halskörper 306, 406, 506, welcher am einen Ende eine Kupplungshülse trägt (nicht gezeigt). Die Kupplungshülse ist gemäss Erfindung ausgestaltet und mit dem Kupplungszapfen eines ebenfalls gemäss Erfindung korrespondierenden Handteils axial verbindbar.

Am anderen Ende schliesst jeweils ein Bürstenkopf 307, 407, 507 an den Halskörper 306, 406, 506 an. Der Bürstenkopf 307, 407, 507 enthält jeweils einen mehrteiligen Borstenträger 308, 408, 508, auf dessen Teilen das Borstenfeld 309, 409, 509 angebracht ist.

Der Borstenträger 308, 408, 508 ist mehrteilig aus mehreren Trägermodulen ausgebildet. Die Trägermodule sind jeweils mit einem Borstenfeld 309, 409, 509 ausgerüstet.

Der Borstenträger 308, 408, 508 enthält jeweils ein Rotations-Trägermodul 308a, 408a, 508a. Das Rotations-Trägermodul 308a, 408a, 508a wird indirekt über den aus dem Griffkörper des Handteils austretenden Antriebsstift angetrieben (nicht gezeigt).

In Betrieb bewegt sich das jeweilige Rotations-Trägermodul 308a, 408a, 508a zwischen zwei End-Positionen in rotierender Weise reversierend hin und her. Diese Bewegung wird auch als rotierende Oszillation bezeichnet.

Gemäss dem Ausführungsbeispiel nach Figur 19 ist der Borstenträger 308 zweiteilig ausgebildet und enthält ein halsseitig angeordnetes, stationäres Trägermodul 308b. Das Rotations-Trägermodul 308a ist im Anschluss an das stationäre Trägemodul 308b kopfendseitig angeordnet.

Gemäss dem Ausführungsbeispiel nach Figur 20 ist der Borstenträger 408 ebenfalls zweiteilig ausgebildet und enthält ein kopfendseitig angeordnetes, stationäres Trägermodul 408b. Das Rotations-Trägermodul 408a ist hier im Anschluss an das stationäre Trägemodul 408b halsseitig angeordnet.

Gemäss dem Ausführungsbeispiel nach Figur 21 ist der Borstenträger 508 dreiteilig ausgebildet. Er enthält je ein kopfendseitig und halsseitig angeordnetes, stationäres Trägermodul 508b, 508c. Das Rotations-Trägermodul 508a ist hier zwischen den beiden stationären Trägermodulen 508b, 508c angeordnet.

Alle gezeigten Borstenträger sind beispielhaft mit oder ohne Borstenfeld gezeigt. Die Borstenträger können gemäss den Möglichkeiten der genannten Beborstungsverfahren mit einem Borstenfeld versehen werden.

## Patentansprüche

1. Aufsteckpflegeteil (5), insbesondere ein Aufsteckbürstenteil, zum Aufstecken auf das Handteil eines elektrischen Mundhygienegeräts, insbesondere einer elektrischen Zahnbürste, enthaltend einen Pflegekopf (7), insbesondere einen Bürstenkopf, und eine Kupplungshülse (20) zur formschlüssigen, axialen Aufnahme des Kupplungszapfens eines Handteils, wobei der Pflegekopf (7) und die Kupplungshülse (20) über einen rohrförmigen Halskörper (6) miteinander verbunden sind, und wobei der Hohlraum der Kupplungshülse (20) einen runden Basisquerschnitt aufweist,
**dadurch gekennzeichnet, dass**
die Kupplungshülse (20) integral mit dem Halskörper (6) ausgebildet ist und eine bezüglich des runden Basisquerschnitts kreissegmentförmige Wandverdickung (21) mit einer innen liegenden, ebenen Axialfläche aufweist, welche eine Querschnittsverengung ausbildet, und in der ebenen Axialfläche (26) wenigstens eine Axialnut (22) zur formschlüssigen Aufnahme eines Axialkammes am Kupplungszapfen und/oder ein Axialkamm zur formschlüssigen Aufnahme einer Axialnut am Kupplungszapfen angeordnet sind, und die Kupplungshülse (20) eine Rastzunge (23) mit einer Rastnase (25) enthält, wobei die Rastzunge (23) der kreissegmentförmigen Wandverdickung (21) gegenüber liegend angeordnet ist.

2. Aufsteckpflegeteil gemäss Anspruch 1, **dadurch gekennzeichnet, dass** der Basisquerschnitt kreisförmig ist.

3. Aufsteckpflegeteil gemäss Anspruch 1 oder 2, **dadurch gekennzeichnet, dass** in der ebenen Axialfläche (26), insbesondere mittig in der Axialfläche (26), ausschliesslich eine Axialnut (22) oder ein Axialkamm angeordnet ist.

4. Aufsteckpflegeteil gemäss einem der Ansprüche 1 bis 3, **dadurch gekennzeichnet, dass** die Kupplungshülse (20) bezüglich des runden Basisquerschnitts zwei einander benachbarte Führungserhebungen (27) ausbildet, welche eine axiale Führungsaufnahme (24) ausbilden.

5. Handteil (2) für ein elektrisches Mundhygienegerät, insbesondere für eine elektrische Zahnbürste, zum Koppeln mit einem Aufsteckpflegeteil (2), insbesondere einem Aufsteckbürstenteil, enthaltend einen Griffkörper (3), einen endseitig am Griffkörper (3) axial angeordneten Kupplungszapfen (30) mit einem runden Basisquerschnitt zum formschlüssigen, axialen Einschub in die Kupplungshülse eines Aufsteckpflegeteils, und enthaltend einen aus dem Kupplungszapfen (30) axial austretenden Antriebsstift (4) zur Übertragung von mechanischer Antriebsenergie,
**dadurch gekennzeichnet**,
der Kupplungszapfen (30) eine bezüglich des runden Basisquerschnitts kreissegmentförmige Aussparung (31) aufweist, welche am Aussenumfang des Kupplungszapfens (30) eine ebene Axialfläche (36) ausbildet, und in der ebenen Axialfläche (36) wenigstens ein Axialkamm (32) zur formschlüssigen Aufnahme einer Axialnut in der Kupplungshülse und/oder eine Axialnut zur formschlüssigen Aufnahme eines Axialkammes in der Kupplungshülse angeordnet sind, und der Kupplungszapfen (30) an seinem Aussenumfang eine Rastkerbe (33) enthält, wobei die Rastkerbe (33) der ebenen Axialfläche (36) gegenüber liegend angeordnet ist.

6. Handteil gemäss Anspruch 5, **dadurch gekennzeichnet, dass** der Basisquerschnitt kreisförmig ist.

7. Handteil gemäss Anspruch 5 oder 6, **dadurch gekennzeichnet, dass** in der ebenen Axialfläche (36), insbesondere mittig in der Axialfläche (36), ausschliesslich ein Axialkamm (32) oder eine Axialnut angeordnet ist.

8. Handteil gemäss einem der Ansprüche 5 bis 7, **dadurch gekennzeichnet, dass** der Kupplungszapfen (30) bezüglich seines runden Basisquerschnitts eine Führungserhebung (34) in Form eines axialen Führungsstreifens enthält.

9. Elektrisches Mundhygienegerät, insbesondere eine elektrische Zahnbürste (1), mit einem Aufsteckpflegeteil (5) nach einem der Ansprüche 1 bis 4 und einem Handteil (2) nach einem der Ansprüche 5 bis 8.

10. Elektrische Mundhygienegerät (1) nach Anspruch 9, **dadurch gekennzeichnet, dass** die Kupplungshülse (20) und der Kupplungszapfen (30) zur gegenseitigen formschlüssigen, axialen Aufnahme ausgebildet sind.

## Claims

1. An attachment care part (5), in particular an attachment brush part, for sticking onto the hand part of an electrical oral hygiene appliance, in particular of an electrical toothbrush, comprising a care head (7), in particular a brush head, and a coupling sleeve (20) for the positive, axial receiving of the coupling nub of a hand part, wherein the care head (7) and the coupling sleeve (20) are connected to one another via a tubular neck body (6), and wherein the cavity of the coupling sleeve (20) has a round basic cross section,
**characterised in that**
the coupling sleeve (20) is integrally formed with the neck body (6) and comprises a wall thickening (21) which is circle-segment-shaped with respect to the round basic cross section and is with an inner-lying, plane axial surface forming a cross-sectional narrowing, and at least one axial groove (22) for positively receiving an axial ridge on the coupling nub and/or at least one axial ridge for positively receiving an axial groove on the coupling nub are arranged in the plane axial surface (26), and the coupling sleeve (20) comprises a latching tongue (23) with a latching lug (25), wherein the latching tongue (23) is arranged lying opposite the circle-segment-shaped wall thickening (21).

2. An attachment care part according to claim 1, **characterised in that** the basic cross section is circular.

3. An attachment care part according to claim 1 or 2, **characterised in that** exclusively an axial groove (22) or an axial ridge is arranged in the plane axial surface (26), in particular centrally in the axial surface (26).

4. An attachment care part according to one of the claims 1 to 3, **characterised in that** the coupling sleeve (20), with respect to the round basic cross section forms two guide prominences (27) which are adjacent one another and which form an axial guide receiver (24).

5. A hand part (2) for an electrical oral hygiene appliance, in particular for an electrical toothbrush, for coupling to an attachment care part (2), in particular to an attachment brush part, comprising a grip body (3), a coupling nub (30) which is axially arranged at the end side on the grip body (3) and which has a round basic cross section for the positive, axial insertion into the coupling sleeve of an attachment care part, and comprising a drive pin (34) which exits axially out of the coupling nub (30), for the transmission of mechanical drive energy,
**characterised in that**
the coupling nub (30) comprises a recess (31) which is circle-segment-shaped with respect to the round basic cross section and which forms a plane axial surface (36) on the outer periphery of the coupling nub (30), and at least one axial ridge (32) for the positive receiving of an axial groove in the coupling sleeve and/or at least one axial groove for the positive receiving of an axial ridge in the coupling sleeve are arranged in the plane axial surface (36), and the coupling nub (30) on its outer periphery comprises a latching notch (33), wherein the latching notch (33) is arranged lying opposite the plane axial surface (36).

6. A hand part according to claim 5, **characterised in that** the basic cross section is circular.

7. A hand part according to claim 5 or 6, **characterised in that** exclusively an axial ridge (32) or an axial groove is arranged in the plane axial surface (36), in particular centrally in the axial surface (36).

8. A hand part according to one of the claims 5 to 7, **characterised in that** the coupling nub (30) with regard to its round basic cross section comprises a guide prominence (34) in the form of an axial guide strip.

9. An electrical oral hygiene appliance, in particular an electric toothbrush (1), with an attachment care part (5) according to one of the claims 1 to 4 and with a hand part (2) according to one of the claims 5 to 8.

10. An electrical oral hygiene appliance (1) according to claim 9, **characterised in that** the coupling sleeve (20) and the coupling nub (30) are designed for the mutual positive, axial receiving.

## Revendications

1. Pièce de soin enfichable (5), en particulier pièce enfichable de brosse destinée à être enfichée sur la pièce de poignée d'un appareil électrique d'hygiène buccale, en particulier d'une brosse à dents électrique,
contenant une tête de soin (7), en particulier une tête de brosse, et une douille d'accouplement (20) destinée à recevoir axialement en correspondance géométrique le tourillon d'accouplement d'une pièce de poignée,
la tête de soin (7) et la douille d'accouplement (20) étant reliées l'une à l'autre par un corps tubulaire (6) de col,
la cavité de la douille d'accouplement (20) présentant une section transversale de base ronde, **caractérisée en ce que**
la douille d'accouplement (20) est configurée d'une seule pièce avec le corps (6) de col et présente par rapport à la section transversale circulaire de base un épaississement (21) de paroi en forme de segment de cercle présentant une surface axiale plane qui est située du côté intérieur et qui forme un rétrécissement de la section transversale,
**en ce qu'**au moins une rainure axiale (22) qui reprend en correspondance géométrique un peigne axial situé sur le tourillon d'accouplement et/ou un peigne axial qui reçoit en correspondance géométrique une rainure axiale prévue sur le tourillon d'accouplement sont disposés dans la surface axiale plane (26),
**en ce que** la douille d'accouplement (20) contient une languette d'encliquetage (23) dotée d'un bec d'encliquetage (25) et
**en ce que** la languette d'encliquetage (23) est disposée face à l'épaississement (21) de la paroi en forme de segment de cercle.

2. Pièce de soin enfichable selon la revendication 1, **caractérisée en ce que** la section transversale de base est circulaire.

3. Pièce de soin enfichable selon les revendications 1 ou 2, **caractérisée en ce que** seule une rainure axiale (22) ou un peigne axial sont disposés dans la surface axiale plane (26), en particulier au milieu de la surface axiale (26).

4. Pièce de soin enfichable selon l'une des revendications 1 à 3, **caractérisée en ce que** la douille d'accouplement (20) forme par rapport à la section transversale ronde de base deux reliefs de guidage (27) voisins l'un de l'autre qui forment un logement axial de guidage (24).

5. Pièce de poignée (2) pour appareil électrique d'hygiène buccale, en particulier pour une brosse à dents électrique, destinée à être accouplée à une pièce enfichable de soin (2), en particulier à une pièce enfichable de brosse, contenant un corps de saisie (3), un tourillon d'accouplement (30) disposé axialement à l'extrémité du corps de saisie (3) et présentant une section transversale de base ronde pour permettre une insertion axiale en correspondance géométrique dans la douille d'accouplement d'une pièce enfichable de soin, et contenant une tige d'entraînement (4) qui déborde axialement du tourillon d'accouplement (30) pour transférer une énergie mécanique d'entraînement, **caractérisée en ce que**
le tourillon d'accouplement (30) présente par rapport à la section transversale de base ronde une découpe (31) en forme de segment de cercle qui forme à la périphérie extérieure du tourillon d'accouplement (30) une surface axiale plane (36),
**en ce qu'**au moins un peigne axial (32) qui reçoit en correspondance géométrique une rainure axiale prévue dans la douille d'accouplement et/ou une rainure axiale qui reprend en correspondance géométrique un peigne axial prévue dans la douille d'accouplement sont disposés dans la surface axiale plane (36),
**en ce que** le tourillon d'accouplement (30) contient à sa périphérie extérieure une entaille d'encliquetage (33) et
**en ce que** l'entaille d'encliquetage (33) est disposée face à la surface axiale plane (36).

6. Pièce de poignée selon la revendication 5, **caractérisée en ce que** la section transversale de base est circulaire.

7. Pièce de poignée selon les revendications 5 ou 6, **caractérisée en ce que** seul un peigne axial (32) ou une rainure axiale sont disposés dans la surface axiale plane (36), en particulier au milieu de la surface axiale (36).

8. Pièce de poignée selon l'une des revendications 5 à 7, **caractérisée en ce que** le tourillon d'accouplement (30) présente par rapport à sa section transversale de base ronde un relief de guidage (34) qui présente la forme d'un ruban axial de guidage.

9. Appareil électrique d'hygiène buccale, en particulier brosse à dents électrique (1), présentant une pièce enfichable de soin (5) selon l'une des revendications 1 à 4 et une pièce de poignée (2) selon l'une des revendications 5 à 8.

10. Appareil électrique d'hygiène buccale (1) selon la revendication 9, **caractérisé en ce que** la douille d'accouplement (20) et le tourillon d'accouplement (30) sont configurés pour s'engager axialement l'un dans l'autre en correspondance géométrique.
